(19) Europäisches Patentamt
European Patent Office
Office européen des brevets

(11) Veröffentlichungsnummer: **0 217 364 B2**

(12) # NEUE EUROPÄISCHE PATENTSCHRIFT

(45) Veröffentlichungstag der neue Patentschrift: **29.11.95**

(51) Int. Cl.6: **C08G 77/445**, C09D 5/00, C09D 7/00, C09D 183/04, C09D 201/00

(21) Anmeldenummer: **86113456.7**

(22) Anmeldetag: **01.10.86**

Die Akte enthält technische Angaben, die nach dem Eingang der Anmeldung eingereicht wurden und die nicht in dieser Patentschrift enthalten sind.

(54) **Lacke und Formmassen enthaltend polyestergruppenhaltige Polysiloxane.**

(30) Priorität: **03.10.85 DE 3535283**

(43) Veröffentlichungstag der Anmeldung: **08.04.87 Patentblatt 87/15**

(45) Bekanntmachung des Hinweises auf die Patenterteilung: **27.01.93 Patentblatt 93/04**

(45) Bekanntmachung des Hinweises auf die Entsheidung über den Einspruch: **29.11.95 Patentblatt 95/48**

(84) Benannte Vertragsstaaten: **AT BE CH DE ES FR GB IT LI LU NL SE**

(56) Entgegenhaltungen:
**WO-A-86/04072**
**DE-A- 3 344 911**
**GB-A- 769 632**
**US-A- 4 395 527**

(73) Patentinhaber: **Byk-Chemie GmbH**
**Postfach 10 02 45**
**D-46463 Wesel (DE)**

(72) Erfinder: **Haubennestel, Karlheinz**
**Hermann-Hesse-Strasse 30**
**D-4230 Wesel (DE)**
Erfinder: **Bubat, Alfred**
**Gotenstrasse 19**
**D-4230 Wesel-Bislich (DE)**

(74) Vertreter: **Türk, Gille, Hrabal, Leifert**
**Brucknerstrasse 20**
**D-40593 Düsseldorf (DE)**

EP 0 217 364 B2

## Beschreibung

Die Erfindung betrifft Lacke und Formmassen mit einem antiadhäsive Eigenschaften erzeugenden und die Gleitfähigkeit erhöhenden Gehalt an polyestergruppenhaltigen Polysiloxanen sowie deren Verwendung als Zusatzmittel für Lacke und Formmassen, um diesen antiadhäsive Eigenschaften und eine höhere Gleitfähigkeit zu verleihen.

Bekanntlich werden Polysiloxane Lacken zugesetzt, um aufgrund der sich dabei ausbildenden Grenzschicht eine schmutzabweisende Oberfläche zu erzielen. Außerdem werden durch solche Polysiloxanzusätze die Kratzfestigkeit und Gleitfähigkeit der Oberflächen verbessert.

Es ist auch bereits bekannt, Formmassen Polysiloxane zuzusetzen, um nach der Formgebung, die mit einer chemischen Vernetzung unter Temperatureinwirkung verbunden ist, die Entformung zu erleichtern.

Die Ausbildung antiadhäsiver Oberflächenschichten ist insbesondere dort vorteilhaft, wo Oberflächen zwangsläufig oder einer bewußt herbeigeführten Verschmutzung unterliegen, beispielsweise durch Aufsprühen von Sprühlacken auf Gebäudefassaden, sogenannte Graffiti-Verschmutzungen. Fassaden, deren Oberfläche mittels antiadhäsiver Produkte schmutzabweisend ausgerüstet ist, können von solchen Verschmutzungen leicht wieder gereinigt werden.

Durch den Einsatz von Polysiloxanen in Lacken werden auch Möbeloberflächen kratzfester, so daß die beim täglichen Gebrauch auftretenden Verschleißerscheinungen, wie Kratzer und Markierungen, deutlich herabgesetzt werden können.

Auch bei der Beschichtung von Papier ist es üblich, Polysiloxan-modifizierte Bindemittel einzusetzen, welche den bekannten antiadhäsiven Effekt der sogenannten Trennpapiere ergeben.

Die für die obengenannten Zwecke bisher eingesetzten Polysiloxane sind solche aus der Klasse der Dimethylpolysiloxane, Methylphenylsiloxane, Polyoxyalkylen-modifizierten Dimethylpolysiloxane, reaktiven Polydimethylpolysiloxane und hydroxyfunktionellen Polyethersiloxane. Die Verwendung solcher Produkte ist beschrieben in DE-C-1 111 320, DE-C-1 092 585, EP-A-0 116 966, EP-A-0 103 367, US-A-4 076 695 und in "Proceedings of the SPI 6$^{th}$ International Technical Conference - Improved RIM-Processing with Silicone International Mold Release Technology", sowie in der Broschüre "Goldschmidt Informiert" 7/1982, Nr. 56, S. 2, und im Fatipec-Kongreßbuch 1963, S. 332.

Die genannten Polysiloxane weisen eine Oberflächenaktivität auf, die sich darin äußert, daß sie sich an der Grenzfläche flüssig/gasförmig oder fest/gasförmig anreichern und damit die gewünschten Eigenschaften, d.h. Herabsetzung der Adhäsion und Erhöhung der Gleitfähigkeit, herbeiführen.

Bei den Silicon-modifizierten Bindemitteln handelt es sich um eine eigene Klasse von Beschichtungsmitteln, die mit den obengenannten Polysiloxanen nicht vergleichbar sind, da hier die Polysiloxangruppen in dem Bindemittel durch Polyaddition und Polykondensation fest eingebaut sind. Diese Siliconharze verleihen zwar ebenfalls antiadhäsive Eigenschaften, sind aber aufgrund ihres hohen Si-Anteils recht teuer und damit nur begrenzt einsetzbar.

Sofern es sich nicht um reaktive Polysiloxane handelt, sind die bisher eingesetzten Polysiloxane inerte Substanzen, die mit den sie enthaltenden Lacken und Formmassen im allgemeinen nicht reagieren. Die damit erzielbaren Effekte in Bezug auf Herabsetzung der Adhäsion und Erhöhung der Gleitfähigkeit sind demzufolge von nicht lang anhaltender Wirksamkeit, da die Polysiloxane aufgrund ihrer Oberflächenorientierung leicht abgewischt oder mit Lösungsmitteln abgewaschen werden, wodurch ihre Effekte verloren gehen.

Reaktive Polysiloxane, d.h. solche Polysiloxane, die reaktionsfähige funktionelle Gruppen tragen, können aufgrund ihrer Unverträglichkeit nur sehr schwer in Lackharze oder Formmassen eingearbeitet werden, da sie zur Separation neigen und beim Reagieren mit dem Lackharz oder der Formmasse nicht homogen im System verteilt vorliegen und daher nur Partiell eingebaut werden. Man hat bereits versucht, dieses Problem dadurch zu lösen, daß man die reaktionsfähigen Polysiloxane bereits bei der Herstellung der Reaktivharze mit einbaut. Hierdurch wird jedoch die Mobilität der Polysiloxane beeinträchtigt und die gewünschte Oberflächenorientierung praktisch verhindert, so daß verhältnismäßig große Mengen an Polysiloxan eingesetzt werden müssen, um den gewünschten antiadhäsiven Oberflächeneffekt zu erzielen.

Bei Verwendung der aus der US-A-4 076 695 bekannten Carboxy-funktionellen Siloxane in Polyurethansystemen wird die Urethanbildungsreaktion verzögert, so daß keine ausreichend schnelle Reaktion erzielt wird ohne drastische Erhöhung der Katalysatoranteile bzw. Veränderung der Verfahrenstechnik. Aufgrund der Unverträglichkeit der in den US-A-4 076 695, EP-A-0 103 367 und EP-A-0 116 966 beschriebenen Polysiloxane mit den Lacken und Formmassen, in die sie eingearbeitet werden, können bei der Verschäumung Störungen der Zellstruktur, speziell im Polyurethanschaum, auftreten, was zu Unregelmäßigkeiten im Aufbau führt.

Polyether-modifizierte Polysiloxane sind aufgrund der Polyetherstrukturen in Gegenwart von Sauerstoff nur bedingt temperaturstabil, so daß bereits ab 150 °C ein Abbau der Polyetherkette eintritt, was zu

Störungen im Lackharz oder in der Formmasse, in der sie enthalten sind, führt.

Das gilt auch für die aus der DE-A-33 44 911 bekannten, mit Siloxan-Blöcken modifizierten aromatischen Polyester und Polyestercarbonate, die zwar ein gutes Entformungsverhalten aufweisen und daher zur Herstellung von thermoplastisch verarbeitbaren Formmassen geeignet sind, jedoch nicht temperaturstabil sind.

Aufgabe der Erfindung war es daher, modifizierte Polysiloxane zur antiadhäsiven Ausrüstung und Erhöhung der Gleitfähigkeit von Lacken und Formmassen zu finden, welche die obengenannten negativen Eigenschaften nicht aufweisen, insbesondere einen lang anhaltenden Effekt ergeben, ohne mengenmäßig wesentlicher Bestandteil eines Lackes oder einer Formmasse zu sein.

Es wurde nun gefunden, daß diese Aufgabe erfindungsgemäß dadurch gelöst werden kann, daß Lacken oder Formmassen die nachstehend definierten polyestergruppenhaltigen Polysiloxane zugesetzt werden.

Gegenstand der Erfindung sind Lacke und Formmassen mit einem antiadhäsive Eigenschaften erzeugenden und die Gleitfähigkeit erhöhenden Gehalt an Polysiloxanen, die dadurch gekennzeichnet sind, daß sie als Polysiloxane polyestergruppenhaltige Polysiloxane der folgenden allgemeinen Durchschnittsformel in einer Menge von 0,05 bis 5 Gew.-% bezogen auf das Gesamtgewicht der Lacke oder Formmassen enthalten:

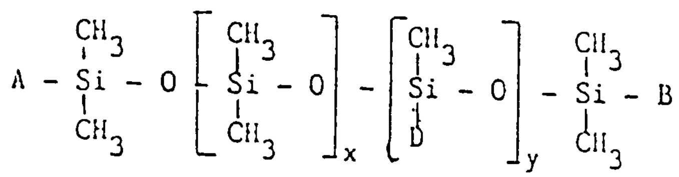

(I)

worin bedeuten:

A, B und D jeweils $-CH_3$ oder -Z-R-Q, wobei das durchschnittliche Molekül mindestens eine Gruppe -Z-R-Q enthält, worin Z für eine $C_{1-11}$-Al-kylengruppe, $-(CH_2)_2SCH_2-$ oder $-(CH_2)_3NHCO-$; R für eine mindestens 3 Carbonsäureestergruppen enthaltende aliphatische und/oder cycloaliphatische und/oder aromatische Gruppe mit einem mittleren Molekularyewicht $\overline{Mn}$ von 300 bis 3000; und Q für eine Gruppe der Formel
$- OH$, $- CH = CH_2$, $- C(CH_3) = CH_2$,

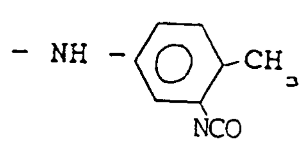

,

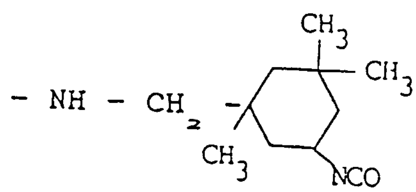

für einen Säurerest der Formel $-COOH$, $-CH = CH-COOH$ oder für ein Alkali- oder Aminsalz eines dieser Säurereste steht,

x eine Zahl von 4 bis 50 und

y eine Zahl von 1 bis 6,

wobei das Verhältnis zwischen der Anzahl der Gruppen -Z-R-Q und der Zahl x 1:3 bis 1:30 beträgt.

Bevorzugte Ausgestaltungen der Erfindung ergeben sich aus den Unteransprüchen 2 bis 10.

Gegenstand der Erfindung ist ferner die Verwendung der vorstehend beschriebenen polyestergruppenhaltigen Polysiloxane als Zusatzmittel für Lacke und Formmassen.

Unter Lacken im Sinne der Erfindung sind Beschichtungen zu verstehen, die aus flüssiger Phase auf ein Substrat aufgetragen werden und unter Ausbildung eines Filmes eine schützende oder funktionelle und/oder dekorative Oberfläche bilden. Als Substrate können z.B. solche aus Holz, Metallen, Kunststoff-Folien, Kunststoffteilen, Papier, Leder und Baustoffen, wie z.B. Mauerwerk, Beton und Putze, verwendet werden.

Es kann sich um unpigmentierte, pigmentierte und Farbstoffe enthaltende Lacke handeln, die unterschiedliche Arten von Bindemitteln enthalten können.

Solche Beschichtungen beinhalten auch solche mit magnetischen Pigmenten, wie sie bei der Herstellung von Datenträgern eingesetzt werden, z.B. $Fe_2O_3$ und $CrO_2$. Auch hier ist die Ausbildung von permanent gleitfähigen Beschichtungen erwünscht.

Die reaktiven Gruppierungen des erfindungsgemäß verwendeten polyestergruppenhaltigen Polysiloxans sollen abgestimmt sein auf den Vernetzungs- oder Härtungsmechanismus des entsprechenden Lacksystems oder der Formmasse, d.h. des Bindemittels, das jeder Lack oder jede Formmasse enthält. Beispiele für die dabei ablaufenden verschiedenen Mechanismen sind der Polyadditionsmechanismus bei z.B. Acrylat/Isocyanatlacken (PUR-Lacken) und Epoxidharzen und der Polykondensationsmechanismus bei z.B. Acrylat/Aminoplastharzlacken, Alkyd/Aminoplastharzlacken, gesättigten Polyesterharzlacken und modifizierten Aminoplastharzlacken, wie Melamin- und Harnstoffharzlacken, sowie der Polymerisationsmechanismus bei der durch energiereiche Strahlung oder Peroxide ausgelösten, radikalischen Polymeriation von z.B. UV- oder Elektronenstrahl-härtbaren Lacksystemen oder ungesättigten Polyesterharzlacken.

Als flüssige Phase können diese Lacke organische Lösungsmittel und/oder Wasser enthalten, wie dies gemäß Stand der Technik dem Fachmann bekannt ist. Die flüssige Phase kann auch in Form von Monomeren oder niedermolekularen Verbindungen vorliegen, die mit den anderen Bindemittelkomponenten unter Bildung der Lacküberzüge reagieren.

Die Lacke gemäß der Erfindung können auch sogenannte Pulverlacke sein, die keine flüssige Phase enthalten und in Form von Pulvern auf die zu beschichtenden Substrate aufgebracht und dort zum Reagieren gebracht werden. Pulverlacke werden häufig im sogenannten elektrostatischen Beschichtungsverfahren aufgebracht (vgl. "Chemieanlagen und Verfahren", Oktober 1984, Seite 87-94, "Dr. Feldmann - Korrosionsschutz durch Kunststoffpulver").

Die Lacke gemäß der Erfindung haben also grundsätzlich die Zusammensetzung wie die bekannten Lacke, die Siloxane als Zusatzstoffe enthalten können. Sie können auch sonst übliche lacktechnische Zusatzstoffe enthalten, wie Netz- und Dispergiermittel, Füllstoffe, Katalysatoren und/oder Beschleuniger für die Härtung und die rheologischen Eigenschaften der Lacke beeinflussende Mittel.

Für Formmassen gilt sinngemäß das gleiche, was oben hinsichtlich der Lacke gesagt wurde. Es sind hierunter Massen zu verstehen, die zu Formkörpern verarbeitet werden können, wobei die in den Massen enthaltenden Reaktionsharze in der Regel bei erhöhter Temperatur während der Formgebung zur Reaktion gebracht werden. Formmassen im Sinne der Erfindung sind z.B. solche auf Basis von ungesättigten Polyesterharzen und Vinylharzen, auch in Kombination mit Thermoplasten, wie Polystyrol, Polyvinylacetat, Polymethylmethacrylat und Styrol/Butadien-Copolymeren, die als schrumpf-reduzierende Anteile den Polyesterharzen zugesetzt werden. Weitere Formmassen sind insbesondere Polyurethane und Polyamide, die z.B. im Reaktions-Spritzguß-Verfahren eingesetzt werden und ganz besondere Schwierigkeiten bezüglich der Entformbarkeit aufweisen.

Andere Formmassen können auch solche auf Basis von Epoxidharzen sein. Diese Epoxidharze werden bevorzugt auf dem Gebiet der Gießmassen und Preßmassen eingesetzt. Weitere Formmassen, die z.B. nach dem Naßpreßverfahren, Injektionsverfahren oder Profilziehverfahren verarbeitet werden können, sind Phenol-Formaldehyd-Kondensationsharze, die auch unter dem Begriff "Phenolharze" bekannt sind.

Die Formmassen können ebenfalls die gemäß Stand der Technik üblichen Zusatzstoffe oder sonstigen Bestandteile enthalten, wie sie auch oben hinsichtlich der Lacke bereits erwähnt wurden. Insbesondere können solche Formmassen Füllstoffe und/oder verstärkende Füllstoffe enthalten, z.B. Glasfasern, Kohlenstoff-Fasern und Polyamidfasern, Wollastonite, Silikate, anorganische Carbonate, Aluminiumhydroxid, Bariumsulfat und Kaolin.

Besonders vorteilhaft wirken sich die erfindungsgemäß verwendeten polyestergruppenhaltigen Polysiloxane aus in hitzehärtbaren Lacken, da die erfindungsgemäß verwendeten Polysiloxane sehr temperaturbeständig sind, z.B. bei Temperaturen bis zu 250 °C und bei relativ kurzen Reaktionszeiten sogar bei Temperaturen bis zu etwa 350 °C, wie sie in Bandlackieranlagen durchaus üblich sind. Hier sind die hydroxyterminierten Polyethersiloxane bereits nicht mehr einsetzbar, da Polyoxyalkylengruppen unter diesen Bedingungen bereits thermisch abgebaut werden.

Als besonders günstig im Sinne der Erfindung hat sich herausgestellt, daß durch die Gruppe R, die eine mindestens drei Carbonsäureestergruppen enthaltende Verbindung darstellt, eine außergewöhnlich gute Verträglichkeit in den unterschiedlichsten Lackharzen und Formmassen-Harzen erzielt wird.

Die Menge der den Lacken und Formmassen erfindungsgemäß zuzusetzenden polyestergruppenhaltigen Polysiloxane ist so groß, daß der gewünschte Effekt hinsichtlich ausreichender antiadhäsiver Eigenschaft und Erhöhung der Gleitfähigkeit erzielt wird. Dabei können schon sehr geringe Mengen ausreichen, um einen merklichen Effekt zu erzielen, z.B. 0,05 Gew.-%, bezogen auf das Gesamtgewicht der Lacke und Formmassen. Bevorzugt beträgt die Menge an polyestergruppenhaltigem Polysiloxan mindestens etwa 0,1 Gew.-%, besonders bevorzugt mindestens etwa 0,5 Gew.-%, bezogen auf das Gesamtgewicht der Lacke oder Formmassen. Die obere Grenze für den Gehalt an polyestergruppenhaltigen Polysiloxanen ist gegeben durch eine ausreichende Wirkung und den Wunsch, die Menge möglichst gering zu halten, da die polyestergruppenhaltigen Polysiloxane relativ hochwertige und teure Produkte sind, so daß aus Preisgründen ein übermäßiger Zusatz in der Regel vermieden wird. Die obere Grenze liegt bei 5 Gew.-%, bevorzugt bei etwa 3 Gew.-% und besonders bevorzugt bei etwa 2 Gew.-%, bezogen auf das Gesamtgewicht der Lacke oder Formmassen.

Wesentlicher Bestandteil der erfindungsgemäß verwendeten polyestergruppenhaltigen Polysiloxane ist die Gruppe R. Dies ist eine Carbonsäureestergruppe mit mindestens drei Gruppierungen

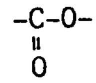

und/oder

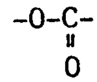 .

Diese Gruppen sind vorzugsweise durch bifunktionelle Kohlenwasserstoffgruppen mit 2 bis 12, bevorzugt 4 bis 6, C-Atomen miteinander verbunden. Besonders bevorzugt sind gesättigte aliphatische Kohlenwasserstoffgruppen mit 5 C-Atomen. Die Gruppe R ist vorzugsweise eine Polycaprolactongruppe, die durch Polymerisation von Caprolacton gebildet wird, wie nachfolgend noch im einzelnen näher erläutert wird.

Bevorzugt stehen A und B jeweils für eine Gruppe -Z-R-Q und D für $CH_3$, dies sind sog. lineare Siloxane. Dabei ist es wiederum bevorzugt, daß das Verhältnis zwischen der Anzahl der Gruppen -Z-R-Q und der Zahl x im Bereich von 1:3 bis 1:25, besonders bevorzugt im Bereich 1:5 bis 1:15, liegt.

Eine andere bevorzugte Ausführungsform besteht darin, Daß A und B jeweils für die Gruppe $-CH_3$ und D für -Z-R-Q stehen. In diesem Fall ist es bevorzugt, daß das Verhältnis zwischen der Anzahl der Gruppen -Z-R-Q und der Zahl x im Bereich 1:3 bis 1:25, besonders bevorzugt im Bereich 1:4 bis 1:16, liegt.

Um die erfindungsgemäß verwendeten, Carbonsäureestergruppen-enthaltenden Polysiloxane herzustellen, können funktionelle Siloxane, wie sie z.B. durch die folgenden Formeln II bis VIII dargestellt sind, nach den nachfolgend beschriebenen Reaktionsmechanismen zur Reaktion gebracht werden.

II 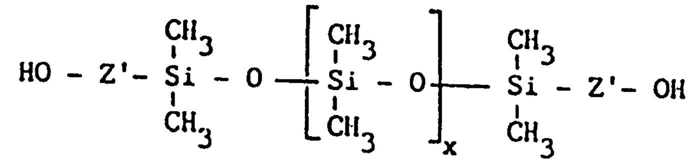

III 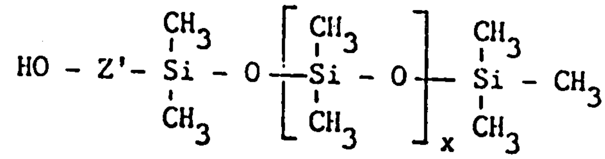

IV 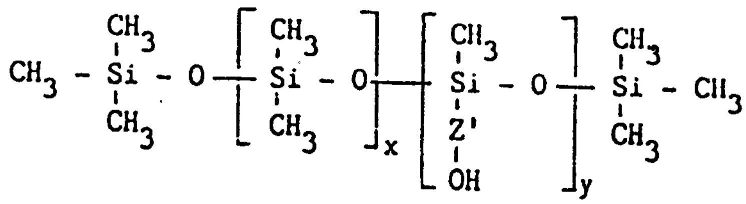

V 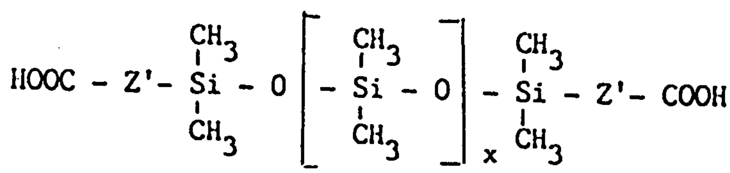

VI 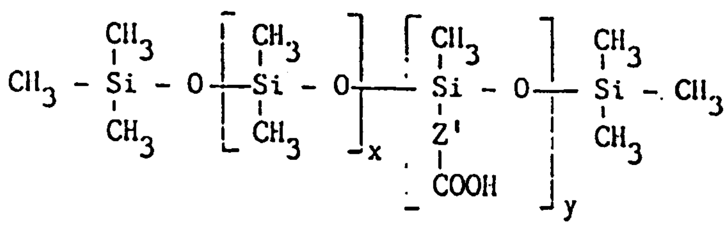

VII 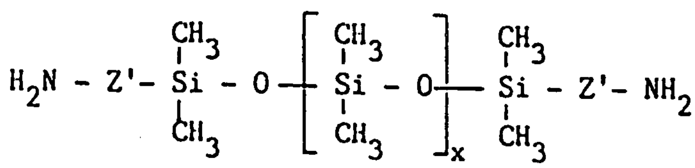

VIII 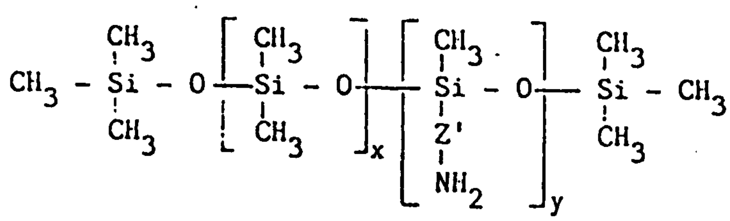

wobei

- x eine Zahl von 4 bis 150 darstellt,
- y eine Zahl von 1 bis 6 darstellt und
- Z' eine bifunktionelle Gruppe darstellt, die ein Si-Atom an eine -OH, -COOH oder $NH_2$-Gruppe bindet.

Diese funktionellen Polysiloxane sind handelsüblich oder können nach bekannten Verfahren hergestellt werden, wie sie beschrieben sind in DE-C-1 236 505, US-A-3 960 574, US-A-4 076 695, US-A-3 481 969,

US-A-3 442 925, US-A-3 567 499 und US-A-2 947 771.

Die für die weitere Umsetzung zu den erfindungsgemäß verwendeten polyestergruppenhaltigen Polysiloxanen notwendige Ermittlung des Äquivalentgewichtes des Ausgangssiloxans erfolgt durch Bestimmung der OH-Zahl, Säurezahl oder Aminzahl.

Die Umsetzung von OH-funktionellen Polysiloxanen gemäß Formel II, III oder IV mit Lactonen, wie β-Propiolacton, δ-Valerolacton, ε-Caprolacton und Dodecalacton oder deren substituierten Derivaten erfolgt durch ringöffnende Veresterung. Beispiele für polymerisierbare Lactone und Verfahren zur Polymerisation können der US-A-4 360 643 entnommen werden.

Die für die Einleitung der ringöffnenden Polymeriation notwendigen OH-Gruppen werden durch die OH-funktionellen Polysiloxane eingebracht, und die Kettenlänge des Polyesters ist durch die eingesetzte Molmenge an Lacton pro Hydroxylgruppe vorgegeben. Die Lactonpolymerisation wird nach bekannten Verfahren initiiert, z.B. durch p-Toluolsulfonsäure oder Dibutylzinndilaurat, und bei Temperaturen von 100 °C bis 180 °C durchgeführt entweder in geeigneten Lösungsmitteln, wie hochsiedenden Benzinfraktionen, Alkylbenzolen, Estern oder Ketonen, oder direkt in der Schmelze. Sie gehorcht dabei z.B. dem folgenden Reaktionsablauf:

IX

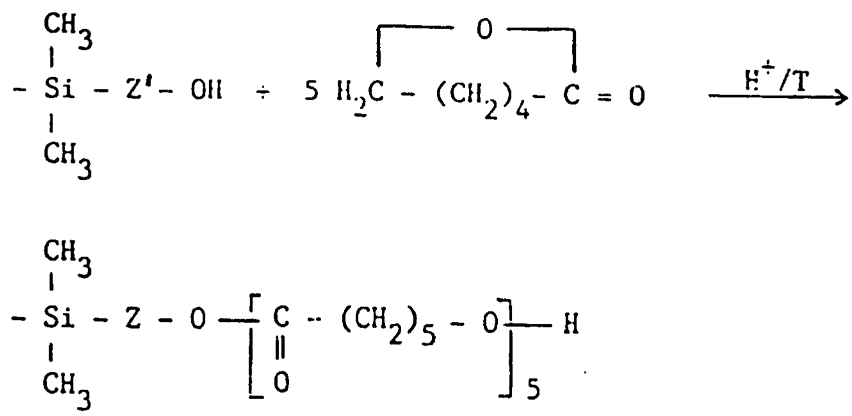


wobei Z' ein für die o.g. Formeln sinnvoller Rest von einer der Bedeutungen von Z gemäß der weiter oben angegebenen Definition ist.

Auf solche Art werden hydroxyterminierte polyestergruppenhaltige Polysiloxane erhalten, so daß in diesem Falle Q für OH steht.

Erfindungsgemäß haben solche aus Lactonen gebildeten Polyester ein mittleres Molekulargewicht Mn von 300 bis 3000, vorzugsweise von 500 bis 1500.

Soll aber Q eine COOH-Funktion sein, wird die zuvor beschriebene Reaktion weitergeführt nach Verfahren die geeignet sind, freie Carbonsäuregruppen zu bilden, wie dies z.B. durch ringöffnende Veresterung mit Di- oder Tricarbonsäureanhydriden möglich ist. Diese Reaktion läuft beispielhaft nach folgendem Reaktionsschema ab:

X

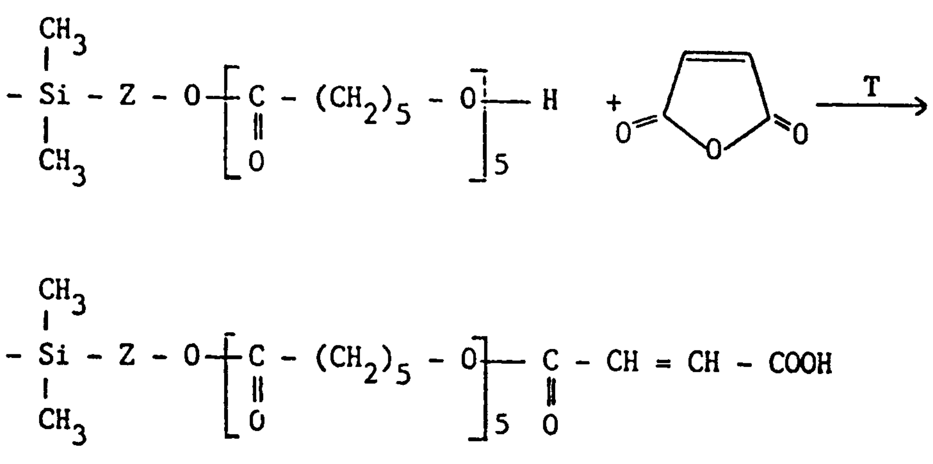

Geeignete Di- oder Tricarbonsäureanhydride sind z.B. Maleinsäureanhydrid, Bernsteinsäureanhydrid, Phthalsäureanhydrid, Tetrahydrophthalsäureanhydrid, Hexahydrophthalsäureanhydrid und 1,2,4-Benzoltricarbonsäureanhydrid.

Wenn Q eine -NCO-Gruppe enthalten soll, werden die unter IX oder XV beispielhaft beschriebenen Reaktionen weitergeführt, indem die hydroxyfunktionellen Polyester mit Polyisocyanaten, vorzugsweise Diisocyanaten, umgesetzt werden in einem solchen Verhältnis der eingesetzten Polyisocyanate zu den OH-Gruppen, daß vorzugsweise nur eine Isocyanatgruppe des Polyisocyanats umgesetzt wird. Dies kann beispielsweise dadurch erreicht werden, daß Polyisocyanate mit unterschiedlicher Reaktivität der Isocyanatgruppen eingesetzt werden. Solche Isocyanate sind z.B. das Isophorondiisocyanat (3-Isocyanatomethyl-3.5.5.-trimethylcyclohexylisocyanat).

Bei diesem Diisocyanat ist die cycloaliphatisch gebundene -NCO Gruppe ca. um den Faktor 10 reaktionsträger als die aliphatisch gebundene -NCO Gruppe.
Außerdem kann die Reaktionsführung zum Monoaddukt erleichtert werden, indem das Polyisocyanat in höheren Molmengen im Verhältnis zu den eingesetzten OH-Gruppen eingesetzt wird als für die Monoadduktbildung notwendig wäre. Der Überschuß an eingesetztem Polyisocyanat wird durch Vakuumdestillation vorzugsweise mit dem Dünnschichtverdampfer entfernt.

Die beschriebene Reaktion läuft beispielhaft nach folgendem Reaktionsschema ab:

XI

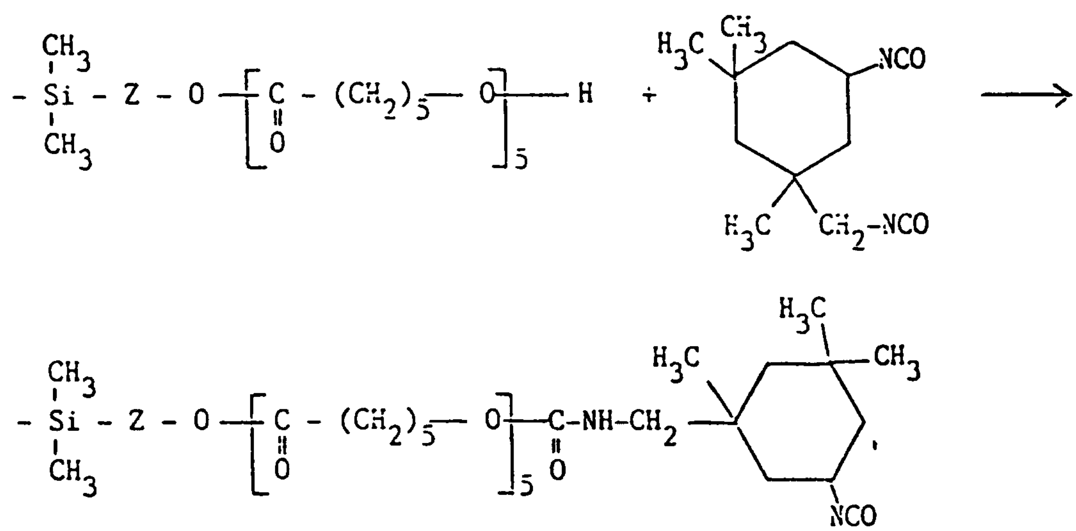

Im Falle, daß Q eine $-CH=CH_2$ Gruppe sein soll, werden die unter IX oder XV beispielhaft beschriebenen Reaktionen weitergeführt, indem die hydroxyfunktionellen Polyester mit z.B. Acrylsäurechlorid oder Methacrylsäurechlorid umgesetzt werden. Dies geschieht zweckmäßigerweise in einem Medium, in dem der frei werdende Chlorwasserstoff salzförmig gebunden wird, wie z.B. Pyridin.

Die beschriebene Reaktion läuft beispielhaft nach folgendem Reaktionsschema ab:

XII

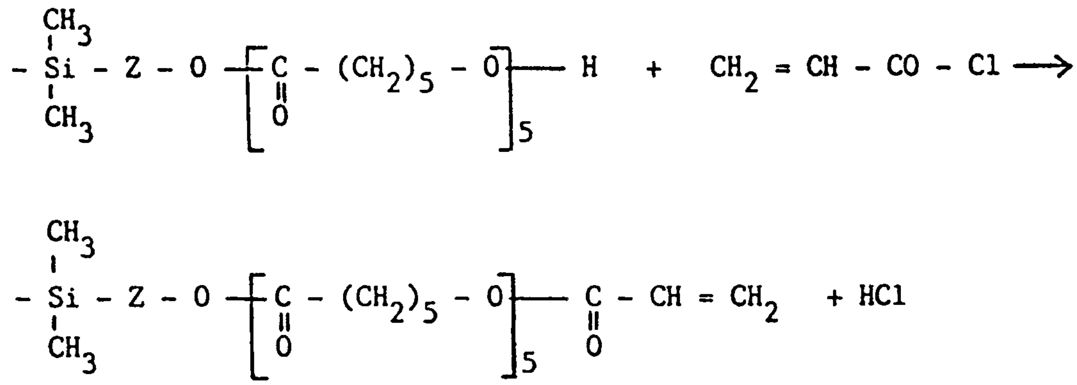

Die Salzbildung carboxyfunktioneller Polysiloxane findet in bekannter Weise statt, indem die Siloxane mit z.B. Alkalicarbonaten oder Alkalihydrogencarbonaten umgesetzt werden, unter Freisetzung von $CO_2$ und $H_2O$. Das entstehende Wasser wird azeotrop mit z.B. Toluol oder durch Vakuum schonend entfernt. Die Reaktion läuft beispielhaft nach folgendem Reaktionsschema ab:

XIII

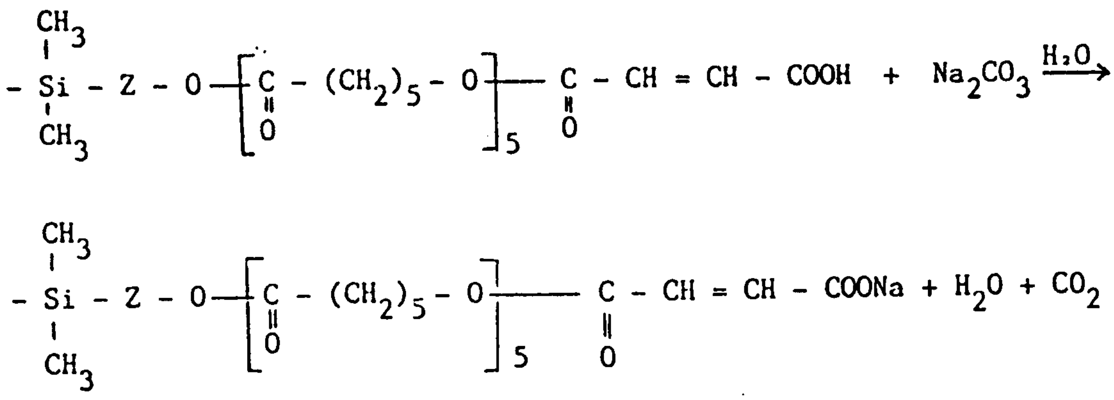


Als Kationen zur Salzbildung sind lithium, Natrium und Kalium geeignet.
Besonders geeignet im Sinne der Ausbildung antiadhäsiver Schichten bei Polyurethanformmassen sind die Aminsalze der erfindungsgemäß verwendeten carboxyfunktionellen Polysiloxane. Besonders geeigente Amine zur Salzbildungsreaktion sind solche Amine, welche in diesen Polyurethansystemen als Katalysatoren dem Stand der Technik gemäß ohnehin eingesetzt werden.
Vorzugsweise werden demzufolge Amine wie z.B. Triethylendiamin (bekannt als DABCO®), Benzyldimethylamin, Triethylamin, N-Alkylmorpholin als Kationen eingesetzt.
Durch solche, bei der Neutralisation der carboxyfunktionellen Polysiloxane eingesetzten Amine wird der gesamte Reaktionsverlauf bei der Vernetzung der Polyurethansysteme nicht oder nur unwesentlich beeinflußt.

Die Umsetzung von -OH, -COOH, oder $-NH_2$ funktionellen Polysiloxanen mit Dicarbonsäuren und/oder Dicarbonsäureanhydriden und Diolen erfolgt nach bekannten Kondensationsverfahren, welche geeignet sind, Polyester zu bilden.

Je nach eingesetzten molaren Anteilen an Dicarbonsäuren und/oder Dicarbonsäureanhydriden und Diolen kann die resultierende Endgruppe der bei der Kondensation entstehenden Polysiloxane beeinflußt

werden im Hinblick auf

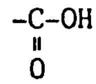

oder -OH Endgruppe.

Eine solche Reaktion läuft nach folgendem beispielhaften Reaktionsschema ab:

XIV

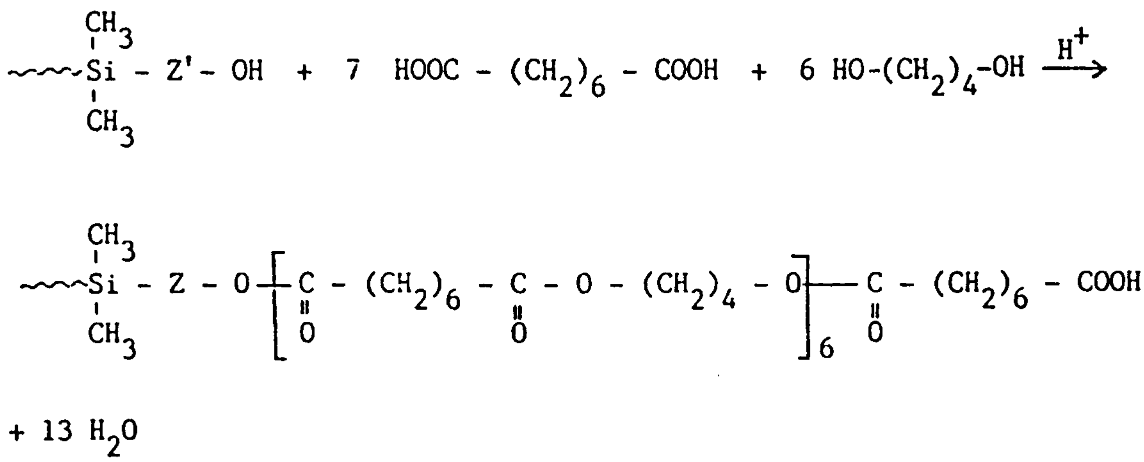

Oder bei Einsatz von aminofunktionellen Siloxanen nach folgendem Reaktionsschema:

XV

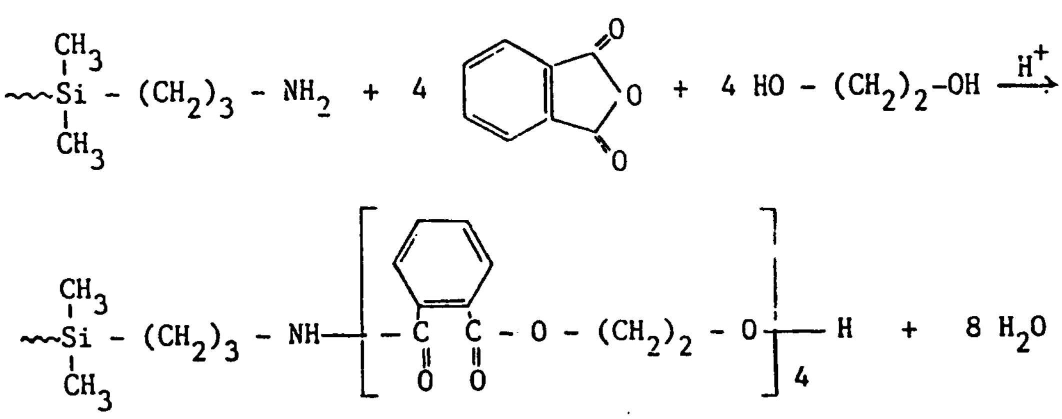

Zweckmäßig haben diese Polyester ein mittleres Molekulargewicht $\overline{Mn}$ von 300 bis 2500, vorzugsweise von 500 bis 1500.

Durch Variation des Polyesteraufbaues, wie der Auswahl der verwendeten Diole, Dicarbonsäureanhydride und/oder Dicarbonsäuren sowie der Zahl der Estergruppen kann eine gezielte Verträglichkeit mit den als Bindemittel für die Lacke oder Formmassen eingesetzten Polymeren erreicht werden. Dies spielt besonders bei Bindemitteln unterschiedlicher Polarität eine bedeutende Rolle. Auch setzt man z.B. zweckmäßig für Bindemittel auf Basis Phthalsäureester auch Phthalsäurepolyester-modifizierte Siloxane ein. Caprolactonpolyester-modifizierte Siloxane sind besonders bevorzugt, weil sie mit den verschiedensten Polymersystemen gut verträglich sind.

Aus den obigen Ausführungen ergibt sich, daß als aliphatische, cycloaliphatische und aromatische Polyestergruppen solche eingesetzt werden können, wie sie nach dem Stand der Technik zur Herstellung

von Polyestern auf dem Gebiet der Lack- und Formmassenindustrie üblich und bevorzugt sind. Die Diole stammen bevorzugt aus der Reihe der $C_2$ bis $C_{12}$ Verbindungen, da diese technisch leicht verfügbar sind, während Dicarbonsäuren zweckmäßig solche mit 2 bis 10 C-Atomen in der Alkylenkette sind. Als cycloaliphatische Gruppe ist die Cyclohexandiylgruppe bevorzugt, als aromatische Gruppe ist die Phenylengruppe bevorzugt.

Die Gruppe Z dient dazu, das Siliciumatom mit der Carbonsäureestergruppe R zu verbinden. Die Art dieser bifunktionellen Verbindungsgruppe hängt ab von den Ausgangsprodukten zur Herstellung der gemäß der Erfindung verwendeten Siloxane und der Art der Umsetzung, wie dies in der Siloxanchemie bekannt ist (vergleiche z.B. US-A-39 60 574, Spalte 1). Beispiele für solche bifunktionellen Verbindungsgruppen sind Alkylengruppen, vorzugsweise mit 2 bis 4, mit 10 oder mit 11 C-Atomen, weil entsprechende Ausgangsprodukte besonders leicht zugänglich sind. Die bifunktionelle Gruppe kann auch eine Alkylengruppe sein, die eine Thioetherbindung (-S-) enthält, nämlich eine Gruppe der Formel $-(CH_2)_2SCH_2-$. Wenn von Aminogruppen-haltigem Siloxan ausgegangen wird, ist die Verbindungsgruppe eine Alkylenamidgruppe, nämlich eine Gruppe der Formel $-(CH_2)_3-NHCO-$.

Die Gruppe Q dient dazu, das Carbonsäureestergruppen-haltige Polysiloxan mit dem Lackharz oder Formmassenharz kovalent zu verbinden.

Die Auswahl der verwendeten Gruppe Q hängt davon ab, nach welchem Reaktionstyp das eingesetzte Lackharz oder Formmassenharz hergestellt wird.

Zweckmäßigerweise wird man bei radikalisch, härtbaren Systemen eine Acryl-, Methacryl-, Allyl- oder Maleinatgruppe bevorzugen. Bei Epoxidharzen bietet sich die Hydroxylgruppe oder Carboxylgruppe an. Bei Polyurethanharzen wird die Hydroxygruppe bevorzugt, wenn das erfindungsgemäße Polysiloxan im Hydroxylgruppen-haltigen Harzanteil eingesetzt werden soll, die Isocyanatgruppe jedoch dann, wenn das erfindungsgemäße Polysiloxan im Isocyanat-haltigen Harzanteil eingesetzt werden soll.

Bei Polyurethansystemen, welche durch entsprechende Katalyse sehr schnell zur Reaktion gebracht werden können, wie dies beim Reaktionsspritzgußverfahren (RIM-Verfahren oder RRIM-Verfahren) der Fall ist, verwendet man zweckmäßigerweise die Carbonsäuresalze der Carbonsäureester-haltigen Polysiloxane.

Wenn kammartige Siloxane verwendet werden, d.h. solche, in denen D für -Z-R-Q steht, soll y zweckmäßig höchstens 4, vorzugsweise höchstens 3 sein.

Bei den sogenannten linearen Siloxanen liegen die Carbonsäureestergruppen nur an den beiden Enden der Siloxankette. In diesem Fall steht x für eine Zahl von 6 bis 50, vorzugsweise von 8 bis 32.

Ein nach dem Kondensationsverfahren hergestelltes erfindungsgemäß verwendetes Polysiloxan wird sinnvollerweise mit linearen Siloxanen durchgeführt, da hier durch gezielte Reaktionsführung eine weiterführende Polykondensation unter Einbau mehrerer Polysiloxan-segmente weitgehend vermieden werden kann. Die Einheitlichkeit solcher Produkte wurde anhand von GPC-Untersuchungen nachgewiesen.

Wenn im Sinne der Erfindung von einer Durchschnittsformel gesprochen wird, wird darunter verstanden, daß im wesentlichen solche Strukturen erhalten werden sollen. Wie dem Fachmann bekannt ist, lassen sich geringfügige Nebenreaktionen jedoch fast nicht ausschließen. Die Forderung kann jedoch als erfüllt betrachtet werden, wenn mindestens 75 % der gewünschten Verbindungen entstanden sind, der Rest als homologe Reihe dieser Verbindungen oder als Nebenprodukte vorliegt.

Werden kammartige Produkte mit y größer 2 nach solchen kondensierenden Verfahren umgesetzt, treten Vernetzungsreaktionen auf, wie dem Fachmann bekannt ist. Insofern ist es sinnvoll bei kammartigen Polysiloxanen im wesentlichen nur solche einzusetzen mit y = 1 bis 2 und die Kondensationsreaktion stufenweise durchzuführen, um Vernetzungsreaktionen weitgehend zu unterdrücken.

Bevorzugt als Ausgangssiloxane sind demzufolge -OH funktionelle Polysiloxane, wie z.B. in den Formeln II, III und IV angegeben, welche durch ringöffnende Veresterung mit Lactonen zu den erfindungsgemäß verwendeten polyestergruppenhaligen Polysiloxanen umgesetzt werden, da hierbei Nebenreaktionen am wirksamsten unterdrückt werden.

Lacke und Formmassen gemäß der Erfindung, enthalten also mindestens ein härtbares Bindemittel und gegebenenfalls Lösungsmittel und/oder oben erwähnte übliche Zusatzstoffe sowie Verbindungen der Formel I.

Beispiel 1

In einem mit Rührer und Rückflußkühler versehenem Reaktionsgefäß wurden 569 g (0.5 Mol) eines Polysiloxans der mittleren Durchschnittsformel

$$HO-(CH_2)_3-Si(CH_3)_2-O-\left[Si(CH_3)_2-O\right]_{12}-Si(CH_3)_2-(CH_2)_3-OH$$

und einer Hydroxylzahl von 99 mg KOH/g mit 571 g (5.0 Mol) ε-Caprolacton versetzt und nach Zugabe von 100 ppm Dibutylzinndilaurat unter Stickstoff auf 160 °C aufgeheizt.

Nach einer Reaktionszeit von 6 Stunden erhielt man ein Organopolysiloxan mit der Durchschnittsformel

$$HO-(CH_2)_5-\underset{\underset{O}{\|}}{C}-\left[O(CH_2)_5-\underset{\underset{O}{\|}}{C}\right]_4-O-(CH_2)_3-Si(CH_3)_2-O-\left[Si(CH_3)_2O\right]_{12}-Si(CH_3)_2-$$

$$-(CH_2)_3-O-\left[\underset{\underset{O}{\|}}{C}-(CH_2)_5-O\right]_4-\underset{\underset{O}{\|}}{C}-(CH_2)_5-OH$$

Die Hydroxylzahl betrug 48 mg KOH/g und die Verseifungszahl 252 mg KOH/g.

## Beispiel 2

In gleicher Weise, wie im Beispiel 1 beschrieben, wurden 393 g (0.5 Mol) eines Polysiloxans der Durchschnittsformel

$$HO-CH_2-Si(CH_3)_2-O-\left[Si(CH_3)_2-O\right]_8-Si(CH_3)_2-CH_2-OH$$

und einer Hydroxylzahl von 143 mg KOH/g und 457 g (4 Mol) ε-Caprolacton zu einem Organopolysiloxan

$$HO-(CH_2)_5-\underset{\underset{O}{\|}}{C}-\left[O-(CH_2)_5-\underset{\underset{O}{\|}}{C}\right]_3-O-CH_2-Si(CH_3)_2-O-\left[Si(CH_3)_2-O\right]_8-$$

$$-Si(CH_3)_2-CH_2-O-\left[\underset{\underset{O}{\|}}{C}-(CH_2)_5-O\right]_3-\underset{\underset{O}{\|}}{C}-(CH_2)_5-OH$$

umgesetzt. Die Hydroxylzahl betrug 66 mg KOH/g und die Verseifungszahl 254 mg KOH/g.

## Beispiel 3

In gleicher Weise, wie im Beispiel 1 beschrieben, wurden 488 g (0.25 Mol) eines Polysiloxans der Durchschnittsformel

$$HO-(CH_2)_{11}-Si(CH_3)_2-O-\left[Si(CH_3)_2-O\right]_{20}-Si(CH_3)_2-(CH_2)_{11}-OH$$

und einer Hydroxylzahl von 57 mg KOH/g und 856 g (7.5 Mol) ε-Caprolacton zu einem Organopolysiloxan

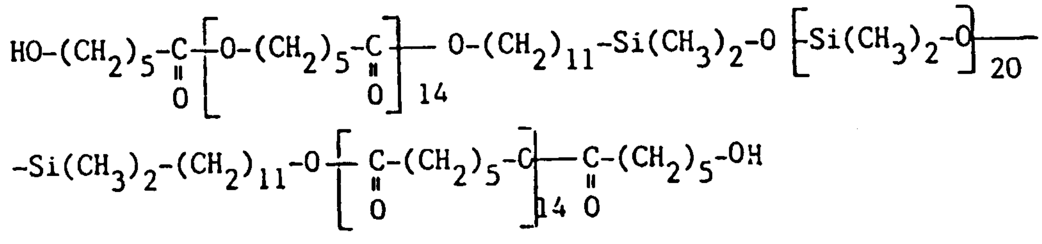

mit einer Hydroxylzahl von 20 mg KOH/g und einer Verseifungszahl von 325 mg KOH/g umgesetzt.

Beispiel 4

In gleicher Weise, wie im Beispiel 1 beschrieben; wurden 837 g (0.5 Mol) eines Polysiloxans der Durchschnittsformel

$$HO-CH_2-Si(CH_3)_2-O-\left[Si-(CH_3)_2-O\right]_{20}-Si(CH_3)_2-CH_2-OH$$

und einer Hydroxylzahl von 67 mg KOH/g und 1001,2 g (10 Mol) δ-Valerolacton zu einem Organopolysiloxan der Durchschnittsformel

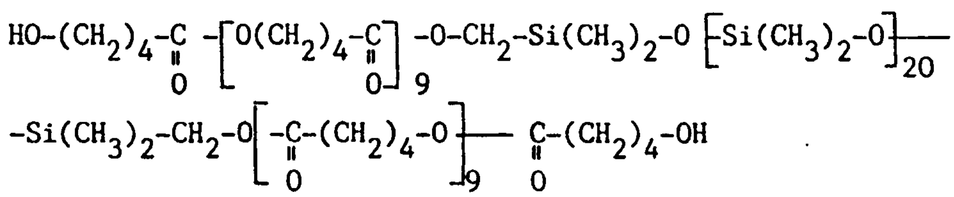

mit einem Festkörper von 96.5 %, einer Hydroxylzahl von 29 mg KOH/g und einer Verseifungszahl von 300 mg KOH/g umgesetzt.

Beispiel 5

In gleicher Weise, wie im Beispiel 1 beschrieben, wurden 902 g (0.33 Mol) eines Polysiloxans der Durchschnittsformel

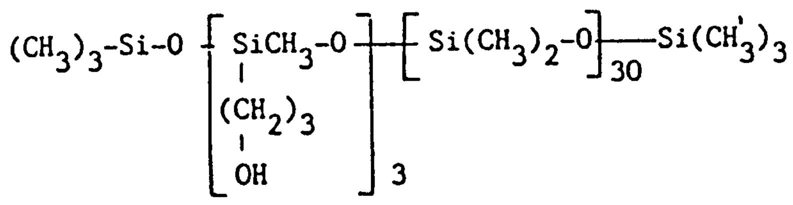

und einer Hydroxylzahl von 62 mg KOH/g und 912 g (8.0 Mol) ε-Caprolacton zu einem Organopolysiloxan

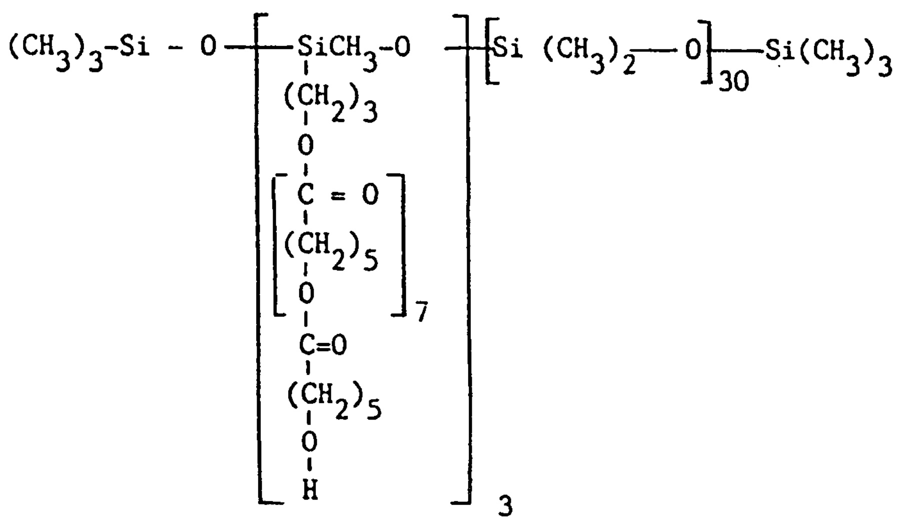

mit einer Hydroxylzahl von 31 mg KOH/g und einer Verseifungszahl von 239 mg KOH/g umgesetzt.

Beispiel 6

In gleicher Weise, wie im Beispiel 1 beschrieben, wurden 944 g (0.2 Mol) eines Polysiloxans der Durchschnittsformel

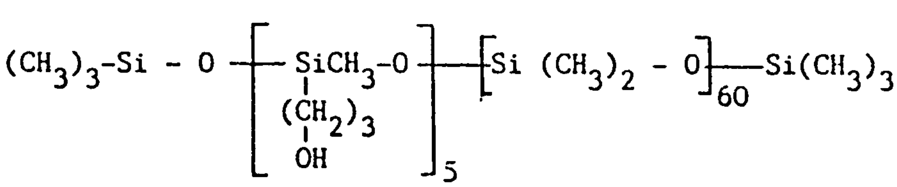

und einer Hydroxylzahl von 59 mg KOH/g mit 1140 g (10 Mol) ε-Caprolacton zu einem Organopolysiloxan der Durchschnittsformel

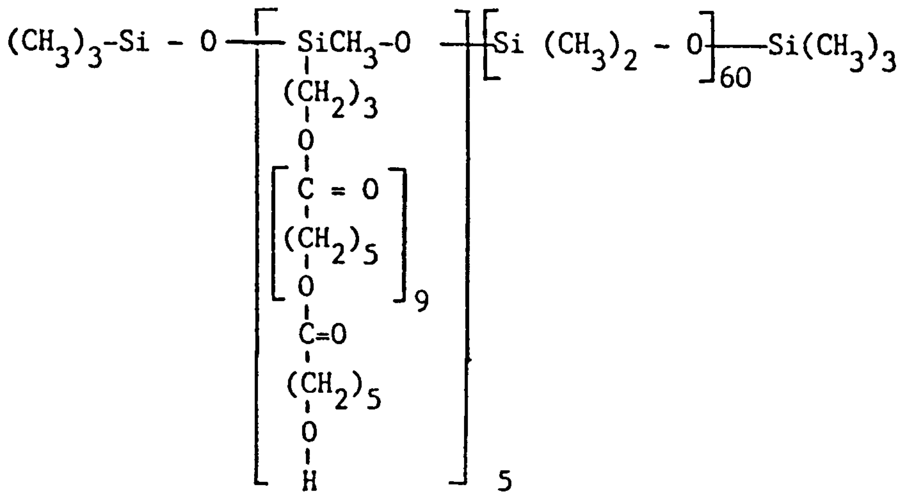

mit einer Hydroxylzahl von 25 mg KOH/g und einer Verseifungszahl von 274 mg KOH/g umgesetzt.

Beispiel 7

In einem mit Rührer und Wasserabscheider versehenem Reaktionsgefäß wurden 717 g (0.5 Mol) eines Polysiloxans der Durchschnittsformel

$$HO-(CH_2)_3-Si(CH_3)_2-O-[Si(CH_3)_2-O]_{16}-Si(CH_3)_2-(CH_2)_3-OH$$

und einer Hydroxylzahl von 78 mg KOH/g mit 467 g (3.2 Mol) Adipinsäure, 180 g (2 Mol) Butandiol-1,4 und 300 g Xylol versetzt und nach Zugabe von 3 g p-Toluolsulfonsäure auf 140 °C erhitzt. Nach einer Reaktionszeit von 4 Stunden (Ausbeute $H_2O$: 91 g; theor. Ausbeute $H_2O$: 90 g) wurden das Xylol und die überschüssige Adipinsäure im Vakuum abgezogen. Das erhaltene Organopolysiloxan

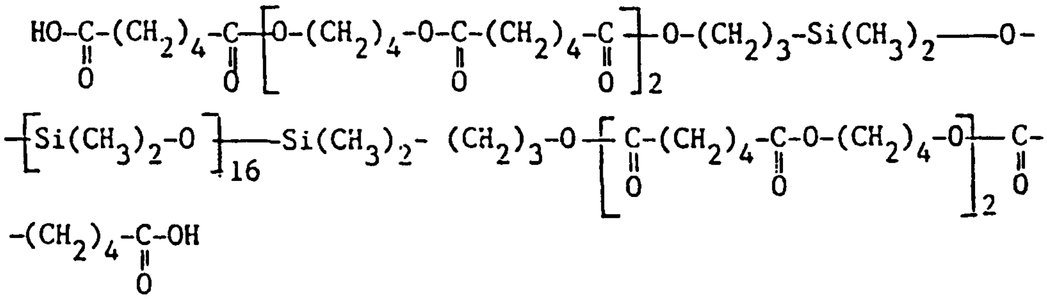

wies eine Säurezahl von 45 mg KOH/g und eine Verseifungszahl von 202 mg KOH/g auf.

Beispiel 8

In gleicher Weise, wie im Beispiel 7 beschrieben, wurden 499 g (0.25 Mol) eines Polysiloxans der Durchschnittsformel

$$HOOC-CH_2S-(CH_2)_2-Si(CH_3)_2-O-\left[Si(CH_3)_2-O\right]_{22}-Si(CH_3)_2-(CH_2)_2-S-CH_2-COOH$$

und einer Säurezahl von 56 mg KOH/g mit 234 g (2.6 Mol) 1,4-Butandiol und 292 g (2.0 Mol) Adipinsäure zu einer Organopolysiloxan

$$HO-(CH_2)_4-O-\left[\underset{\underset{O}{\|}}{C}-(CH_2)_4-\underset{\underset{O}{\|}}{C}-O-(CH_2)_4-O\right]_4-\underset{\underset{O}{\|}}{C}-CH_2S-(CH_2)_2-Si(CH_3)_2-O-\left[Si(CH_3)_2-O\right]_{22}-Si(CH_3)_2-(CH_2)_2-SCH_2-\underset{\underset{O}{\|}}{C}-\left[O-(CH_2)_4-O-\underset{\underset{O}{\|}}{C}-(CH_2)_4-\underset{\underset{O}{\|}}{C}\right]_4-O-(CH_2)_4-OH$$

umgesetzt. Die Hydroxylzahl des erhaltenen Produktes betrug 28 mg KOH/g, die Verseifungszahl 237 mg KOH/g.

Beispiel 9

In gleicher Weise, wie im Beispiel 7 beschrieben, wurden 495 g (0.5 Mol) eines Polysiloxans mit der Durchschnittsformel

$$HO-(CH_2)_3-Si(CH_3)_2-O-\left[Si(CH_3)_2-O\right]_{10}-Si(CH_3)_2-(CH_2)_3-OH$$

und einer Hydroxylzahl von 113 mg KOH/g mit 311 g (2.1 Mol) Phthalsäureanhydrid und 104 g (1.0 Mol) 1,5-Pentandiol zu einem Organopolysiloxan der Durchschnittsformel

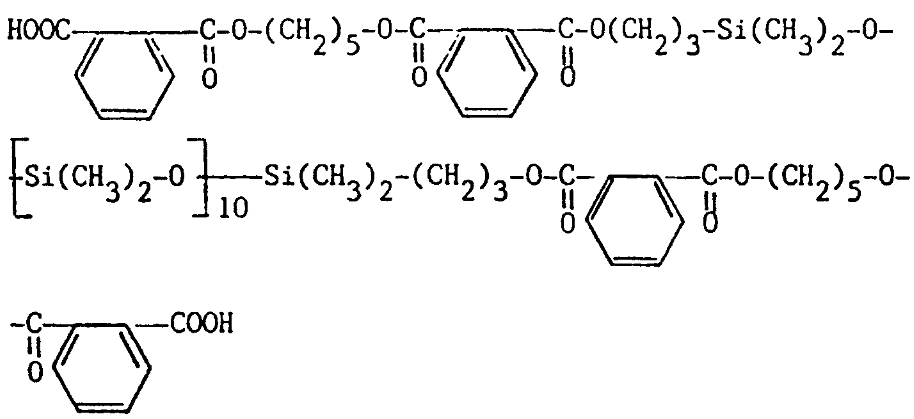

umgesetzt.
Die Säurezahl des erhaltenen Produktes betrug 65 mg KOH/g, die Verseifungszahl 185 mg KOH/g.

Beispiel 10

In gleicher Weise, wie im Beispiel 7 beschrieben, wurden 791 g (0.5 Mol) eines Polysiloxans mit der Durchschnittsformel

$$HO-(CH_2)_3-Si(CH_3)_2-O\left[Si(CH_3)_2-O\right]_{18}-Si(CH_3)_2)-(CH_2)_3OH$$

und einer Hydroxylzahl von 71 mg KOH/g mit 420 g (4.2 Mol) Bernsteinsäureanhydrid und 354 g (3 Mol) 1,6-Hexandiol zu einem Organopolysiloxan der Durchschnittsformel

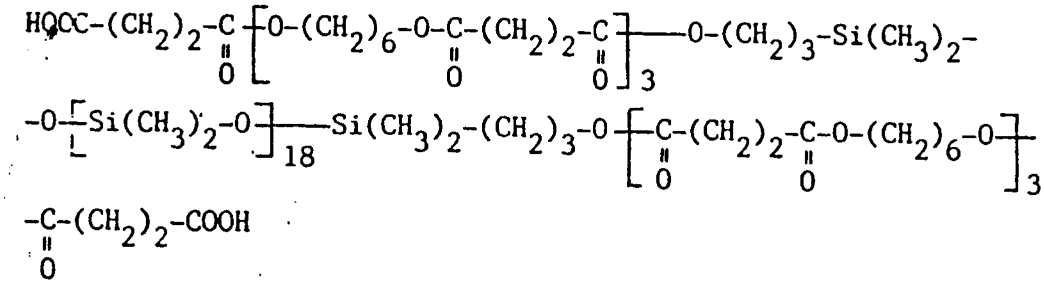

umgesetzt.
Die Säurezahl des erhaltenen Produktes betrug 38.5 mg KOH/g, die Verseifungszahl 271 mg KOH/g.

Beispiel 11

In gleicher Weise, wie im Beispiel 7 beschrieben, wurden 615 g (0.5 Mol) eines Polysiloxans der Durchschnittsformel

$$HO - CH_2 - Si(CH_3)_2 - O\left[Si(CH_3)_2 - O\right]_{14}-Si(CH_3)_2 - CH_2-OH$$

und einer Hydroxylzahl von 91 mg KOH/g mit 444 g (3 Mol) Phthalsäureanhydrid und 333 g (3.2 Mol) Neopentylglykol zu einem Organopolysiloxan der Durchschnittsformel

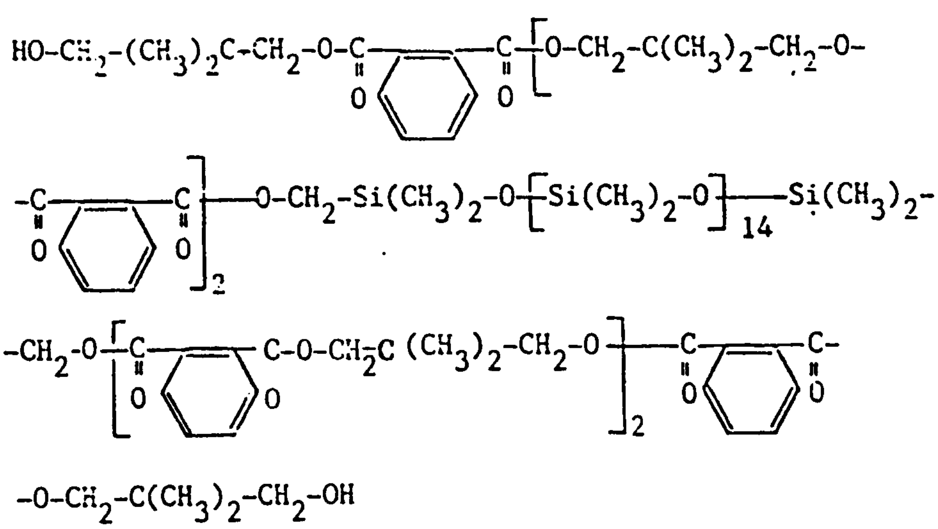

umgesetzt.
Die Hydroxylzahl des erhaltenen Produktes betrug 39 mg KOH/g, die Verseifungszahl 251 mg KOH/g.

Beispiel 12

In einem Reaktionsgefäß, mit Rührer und Wasserabscheider versehen, wurden 716 g (0.5 Mol) eines Polysiloxans der Durchschnittsformel

$$H_2N(CH_2)_3Si(CH_3)_2\text{-}O\text{-}\left[Si(CH_3)_2\text{-}O\right]_{16}\text{-}Si(CH_3)_2\text{-}(CH_2)_3NH_2$$

und einer Aminzahl von 78 mg KOH/g mit 146 g (1 Mol) Adipinsäure und unter Überleiten von Stickstoff auf 160 °C aufgeheizt. Nach Abscheiden von ca. 18 g (1 Mol) Wasser und Abkühlen auf 95 °C wurden 208 g (2 Mol) Pentandiol-1,5 und weitere 307 g (2.1 Mol) Adipinsäure zugegeben und wieder auf 160 °C aufgeheizt. Nach 3 Stunden Reaktionszeit hatten sich ca. 72 g Wasser (4 Mol) abgeschieden.
Nach Anlegen von Vakuum (20 mbar) wurde die überschüssige Adipinsäure bis zu einer Sumpftemperatur von 180 °c abgezogen. Das resultierende Organopolysiloxan mit der Durchschnittsformel

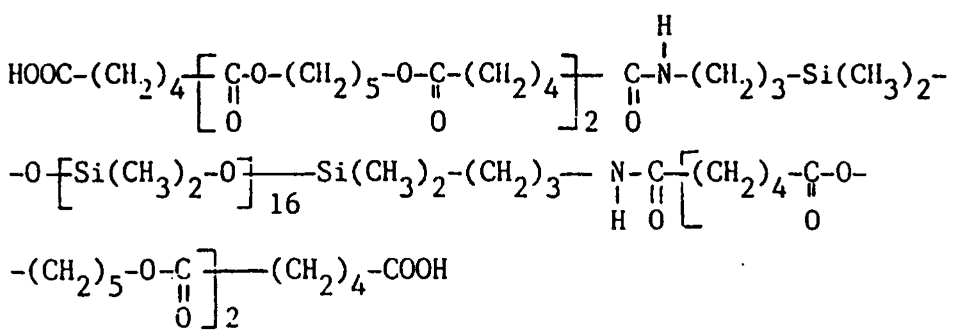

wies eine Säurezahl von 45 mg KOH/g und eine Verseifungszahl von 179 mg KOH/g auf.

Beispiel 13

In einem mit Rührer und Rückflußkühler versehenen Reaktionsgefäß wurden 584 g (0.25 Mol) eines Organopolysiloxans wie in Beispiel 1 synthetisiert mit 49 g (0.5 Mol) Maleinsäureanhydrid innerhalb von 4 Stunden bei 160 °C zu einem Organopolysiloxan der Durchschnittsformel

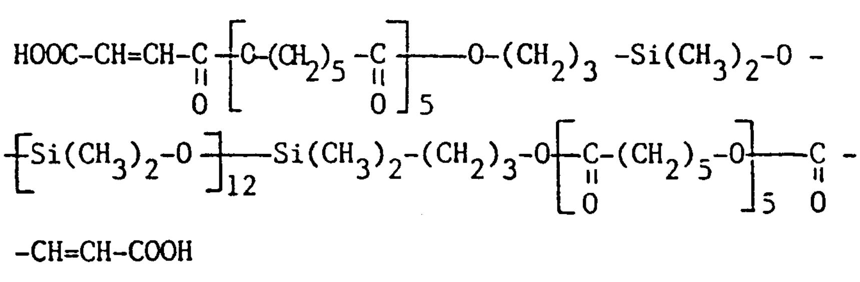

mit einer Säurezahl von 45 mg KOH/g und einer Verseifungszahl von 267 mg KOH/g umgesetzt.

Beispiel 14

In gleicher Weise, wie im Beispiel 13 beschrieben, wurden 1403 g (0.25 Mol) eines Organopolysiloxans wie im Beispiel 3 synthetisiert mit 74 g (0.5 Mol) Phthalsäureanhydrid zu einem Organopolysiloxan der Durchschnittsformel

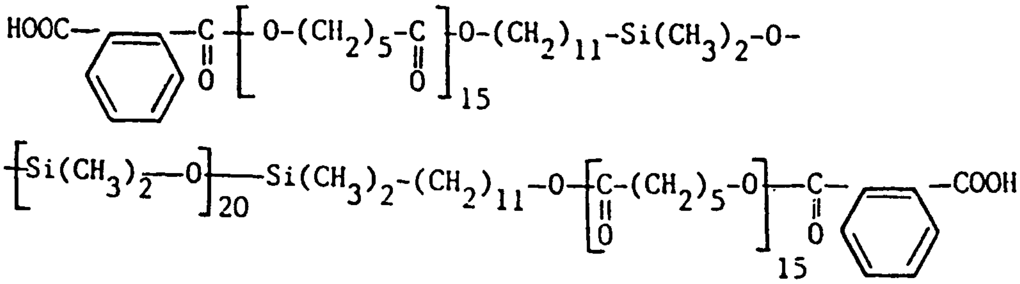

mit einer Säurezahl von 17 mg KOH/g und einer Verseifungszahl von 310 mg KOH/g umgesetzt.

Beispiel 15

In einem mit Rührer und Rückflußkühler versehenen Reaktionsgefäß wurden 863 g (0.5 Mol) eines Organopolysiloxans wie im Beispiel 9 synthetisiert und mit 336 g 25 %iger wässriger $NaHCO_3$-Lösung bei Raumtemperatur neutralisiert.
Nach Zusatz von 250 g Toluol wurde das Wasser azeotrop abdestilliert.
Nach Entfernen des Lösungsmittels durch Destillation wies das erhaltene Organopolysiloxan mit der Durchschnittsformel

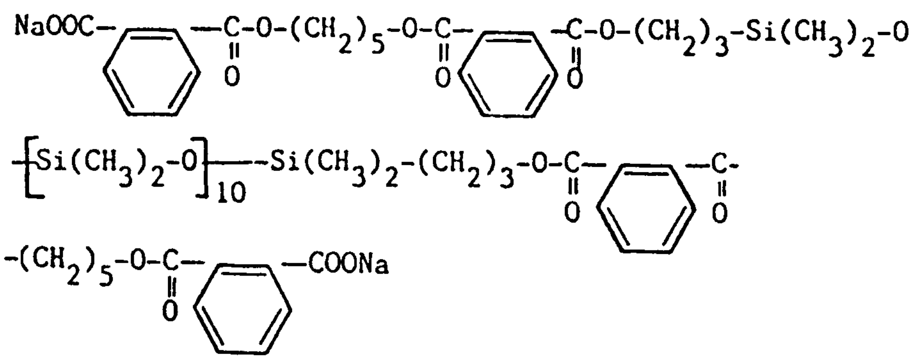

eine Säurezahl von 0.7 mg KOH/g und eine Verseifungszahl von 180 mg KOH/g auf.

Beispiel 16

In gleicher Weise, wie im Beispiel 15 beschrieben, wurden 1246 g (0.5 Mol) eines Organopolysiloxans wie im Beispiel 13 synthetisiert mit 400 g 25 %iger wässriger $KHCO_3$-Lösung zu einem Organopolysiloxan der Durchschnittsformel

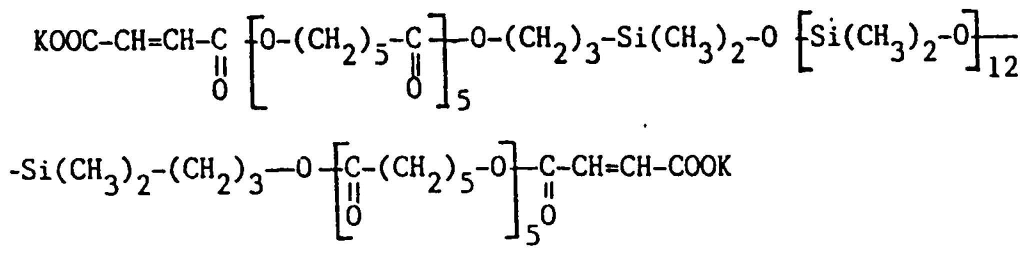

mit einer Säurezahl von 0.5 mg KOH/g und einer Verseifungszahl von 264 mg KOH/g umgesetzt.

Beispiel 17

In einem mit Rührer und Ruckflußkühler versehenen Reaktionsgefäß wurden 1246 g (0.5 Mol) eines Organopolysiloxans wie im Beispiel 13 synthetisiert, mit 300 g Toluol versetzt und durch Zusatz von 101 g (1.0 Mol) Triethylamin unter Rühren neutralisiert. Nach Abziehen des Lösungsmittels wies das erhaltene Organopolysiloxan mit der Durchschnittsformel

$$(C_2H_5)_3NH^{\oplus}\;{}^{\ominus}OOC-CH=CH-\underset{\displaystyle O}{\overset{\|}{C}}-\left[O(CH_2)_5-\underset{\displaystyle O}{\overset{\|}{C}}\right]_5-O-(CH_2)_3-Si(CH_3)_2-O-\left[Si(CH_3)_2-O\right]_{12}-$$

$$-Si(CH_3)_2-(CH_2)_3-O-\left[\underset{\displaystyle O}{\overset{\|}{C}}-(CH_2)_5-O\right]_5-\underset{\displaystyle O}{\overset{\|}{C}}-CH=CH-COO^{\ominus}\;{}^{\oplus}HN(C_2H_5)_3$$

eine Verseifungszahl von 271 mg KOH/g auf.

Beispiel 18

In gleicher Weise, wie im Beispiel 17 beschrieben, wurden 1650 g (0.25 Mol) eines Organopolysiloxans wie im Beispiel 14 beschrieben synthetisiert mit 67.5 g (0.5 Mol) Benzyldimethylamin zu einem Organopolysiloxan der (Durchschnittsformel

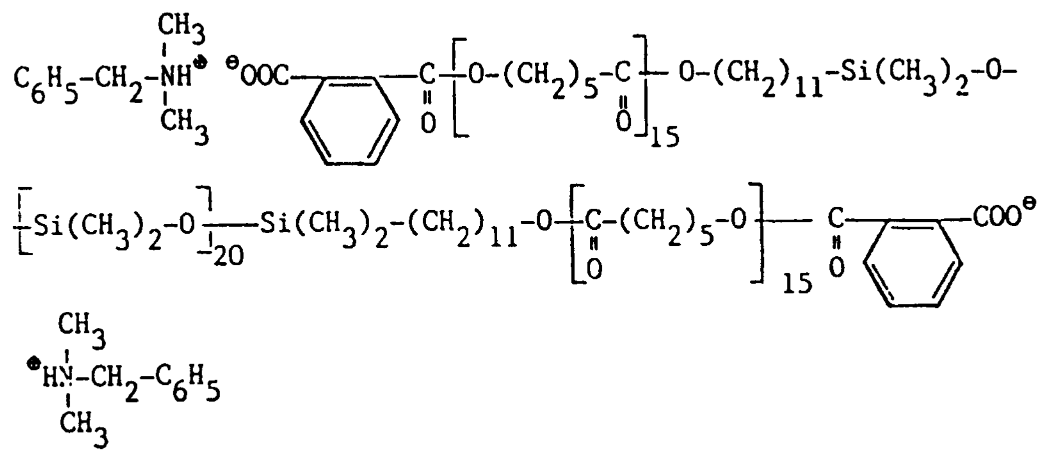

mit einer Verseifungszahl von 315 mg KOH/g umgesetzt.

Beispiel 19

In einem mit Rührer und Ruckflußkühler versehenem Reaktionsgefäß wurden 250 g getrocknetes Toluol und 87 g (0.5 Mol) Toluylen-2,4-diisocyanat vorgelegt und innerhalb von 60 Minuten 561 g (0.1 Mol) eines Organopolysiloxans, wie im Beispiel 3 synthetisiert, zugetropft. Nach 8 Stunden Nachreaktion bei Raumptemperatur wurden im Vakuum das überschüssige Toluylen-2,4-diisocyanat und das Toluol abgezogen. Das erhaltene Organopolysiloxan mit der Durchschnittsformel

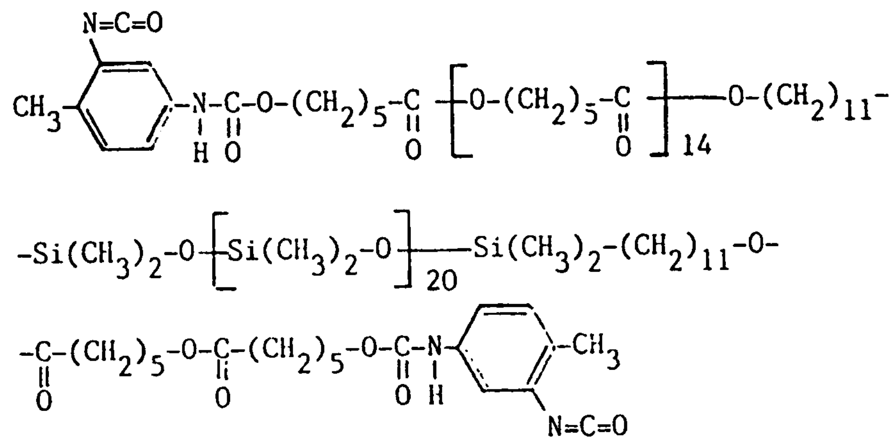

wies einen NCO-Gehalt von 1.5 % und eine Verseifungszahl von 320 mg KOH/g auf.

Beispiel 20

In einem mit Rührer und Rückflußkühler versehenen Reaktionsgefäß wurden 585 g (0.25 Mol) eines Organopolysiloxans, wie im Beispiel 1 synthetisiert, mit 198 g (2.5 Mol) Pyridin, 54.3 g (0.6 Mol) Acrylsäurechlorid und 250 ppm Hydrochinonmonomethylether versetzt und auf 180 °C aufgeheizt. Nach 6 Stunden Nachreaktion wurde das überschüssige Acrylsäurechlorid durch Zusatz von Wasser hydrolysiert und zusammen mit dem Pyridin und dem Pyridinhydrochlorid durch Extraktion mit Wasser aus dem Reaktionsgemisch entfernt.
Nach dem Trocknen mittels azeotroper Destillation wies das erhaltene Organopolysiloxan der Durchschnittsformel

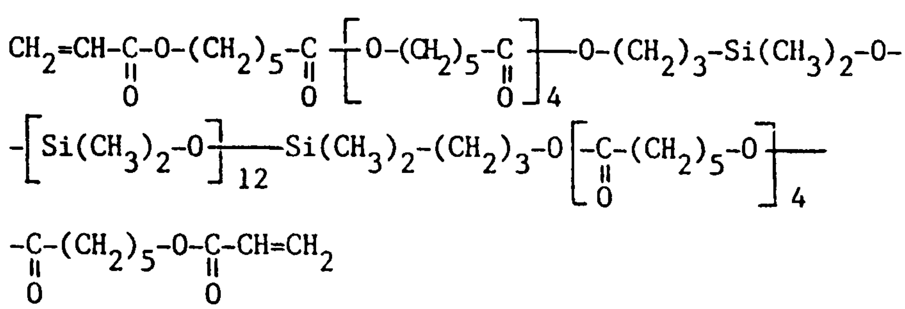

eine Verseifungszahl von 242 mg KOH/g und eine Jodzahl von 20 g Jod/100 g auf.

Lack A

| Möbellack | |
|---|---|
| Fettsäuremodifizierter Hydroxypolyester (Desmophen® RD 181 75 %ig) | 20.0 Gew.% |
| Hydroxypolyester (Desmophen® 1200) | 5.0 Gew.% |
| Celluloseacetobutyrat (Cellit® BP 300 10 %ig) | 4.0 Gew.% |
| Butylacetat | 16.4 Gew.% |
| Toluol | 12.0 Gew.% |
| Ethylacetat | 12.0 Gew.% |
| Ethylglykolacetat | 5.6 Gew.% |
| Härter (Desmodur® HL 60) | 25.0 Gew.% |
| | 100.0 Gew.% |
| Härtungsbedingungen: 10 Minuten bei 80 °C. | |

Lack B

| Acryl/Melamin-Lack | |
|---|---|
| Acrylharz 50 %ig (Synthacryl® SC 303/Fa. Hoechst) | 43.4 Gew.% |
| Melaminharz (Setamine® US 133/Fa. Synthese) | 15.5 Gew.% |
| Pigment (Sicominrot® L 3030 S/Fa. BASF) | 25.0 Gew.% |
| Bentone® - Paste 10 %ig | 2.5 Gew.% |
| Xylol | 4.6 Gew.% |
| Aromatischer Kohlenwasserstoff Siedebereich 165 - 185 °C | 6.0 Gew.% |
| Aromatischer Kohlenwasserstoff Siedebereich 186 - 215 °C | 3.0 Gew.% |
| | 100.0 Gew.% |
| Härtungsbedingungen: 20 Minuten bei 130 °C | |

Lack C

| Coil Coating Lack | |
|---|---|
| Ölfreier Polyester (Uralac® 107-RA 8, Fa. Scado) | 44.55 Gew.% |
| $TiO_2$ (RN 59/Fa. Bayer) | 20.35 Gew.% |
| Melaminharz (Cymel® 301/ Fa. American Cyanamid Comp.) | 4.70 Gew.% |
| p-Toluolsulfonsäure, 40 %ig in Ethylglykolacetat | 0.25 Gew.% |
| Verdünnung | 30.15 Gew.% |
| | 100.00 Gew.% |
| Härtungsbedingungen: 60 Sekunden bei 260 °C | |

Lack D

| | |
|---|---|
| UV-Reaktivharz (Plex® 6617-0)<br>Reaktivverdünner (Plex® 6618-0)<br>Photoinitiator (Irgacure® 651)<br>Benzophenon | 57.40 Gew.%<br>38.30 Gew.%<br>2.90 Gew.%<br>1.40 Gew.%<br>100.00 Gew.% |
| Härtungsbedingungen: UV-Härtung mit 5 m x $min^{-1}$ bei einer Lampe von 80 W x $an^{-1}$ | |

Lack E

| Antigraffitibeschichtung | |
|---|---|
| Hydroxypolyester (Desmophen® 651 67 %ig)<br>Ethylglykolacetat<br>Methoxybutylacetat<br>Reaktionsbeschleuniger (Desmorapid® PP 10 %ig)<br>Entlüftungsmittel<br>$TiO_2$<br>Bentone 10 %iger Aufschluß<br>Härter (Desmodur® IL 75 %ig) | 31.2 Gew.%<br>5.1 Gew.%<br>3.4 Gew.%<br>1.2 Gew.%<br>0.2 Gew.%<br>31.8 Gew.%<br>2.1 Gew.%<br>25.0 Gew.%<br>100.0 Gew.% |
| Härtungsbedingungen: lufttrocknend bei Raumtemperatur | |

Lack F

| Trennlack | |
|---|---|
| Fettsäure modifizierter Hydroxypolyester (Desmophen® 1300)<br>Ethylacetat<br>Härter (Desmodur® HL 60 %ig) | 33.30 Gew.%<br>35.10 Gew.%<br>31.60 Gew.%<br>100.00 Gew.% |
| Härtungsbedingungen: 60 Sekunden bei 140 °C | |

**Prüfung des Gleitwiderstandes**

Auf 60 x 15 cm großen Prüfplatten (Lack A - Möbelplatte; Lack B, C und D Aluminiumplatte) wurde mittels Gießmaschine (Lack A), Spritzauftrag (Lack B) und Spiralrakel (Lack C, Lack D) eine ca. 40 µm dicke Lackschicht aufgebracht.

Nach Aushärten des Lackfilms wurde visuell im Durchlicht die Transparenz der Lackfilme beurteilt (bei pigmentierten Lacken wurde diese Prüfung separat in entsprechenden Klarlacken geprüft). Nach Bestimmung des Gleitwiderstandes wurden anschließend die Lackoberflächen mit einem Testbenzin/Ethanol-Gemisch gereinigt und erneut der Gleitwiderstand mit nachfolgend beschriebener Methode gemessen.

Den Lacken wurden die in Tabelle 1 angegebenen Polysiloxane gemäß der Erfindung zugesetzt.

Als Vergleichsbeispiele wurden folgende handelsübliche Polysiloxane eingesetzt.

Vergleichsbeispiel 1 = niedermolekulares Polydimethylsiloxan (Baysilon® M 50)
Vergleichsbeispiel 2 = Polyoxyalkylenpolysiloxancopolymer (Byk®-300)
Vergleichsbeispiel 3 = α,ω-Hydroxyalklpolydimethylsiloxan (Baysilon® OF/OH 502)

Die Ergebnisse sind in Tabelle 1 zusammengefaßt.

Für die Messung des Gleitwiderstandes wurde eine exakte Meßmethode angewandt, welche die früher oft angewandte "Fingernagelprobe" oder die Messung des Abgleitwinkels von zylindrischen Körpern auf der Beschichtung ablöst und im folgenden beschrieben ist.
Verwendet wurde ein elektrisches Filmaufziehgerät mit konstantem Vorschub. Auf der Halterung für das Filmziehlineal wurde ein Zugdruck-Kraftaufnehmer befestigt, der über einen Meßverstärker auf einen Schreiber jeden Widerstand aufzeichnet, der dem Gleitkörper entgegensteht. Der Gleitkörper wird in Zug- oder Druckrichtung über die zu messende Oberfläche bewegt.
Als Gleitkörper wurden Gewichtssteine oder mit Stahlkugeln gefüllte Hohlzylinder verwendet, die auf der Gleitfläche mit einer definierten Filzunterlage versehen sind.

**Durchführung der Messungen:**

Nach Konzipierung dieser Meßaparatur wurden an einer definierten Oberfläche - schwarze matte Kunststoffplatten, wie sie für den Scheuertest für Dispersionsfarben Verwendung finden - Messungen mit variiertem Gleitkörpergewicht und abgestuften Geschwindigkeiten durchgeführt. Bei der Prüfung der verschiedenen Zusatzstoffe wurden Glasplatten als Träger der Lackfilme verwendet.

**Meßergebnisse**

Bei den vergleichenden Messungen wurde festgestellt, daß der Gleitwiderstand proportional zum Gewicht des Gleitkörpers zunimmt. Außerdem zeigte sich, daß die Geschwindigkeit, mit der der Meßkörper über die Oberfläche bewegt wird, selbst bei Erhöhung auf das 4-fache, keinen meßbaren Einfluß auf das Ergebnis hat.

Es resultiert bei Eintragungen der Meßpunkte im Diagramm eine Gerade, die aus dem Nullpunkt kommt. Bei wiederholt durchgeführten Messungen an verschiedenen Oberflächen ergibt sich immer der gleiche Kurvenverlauf. Der Winkel der Kurve richtet sich nach den Gleiteigenschaften der Oberfläche. Damit ist bewiesen, daß die Meßmethode zu sicheren reproduzierbaren Ergebnissen führt. Für die Praxis bedeutet das eine exakte und schnelle Messung der Gleiteigenschaften mit objektiven Zahlenwerten. Der Gleitwiderstand wird in Newton (N) angegeben.

**Prüfmethode Antigraffitibeschichtung**

Auf 50 x 50 cm großen mit einer Grundierung vorbehandelten Asbestzementplatte wurde mittels Spritzauftrag eine ca. 80 µm dicke Lackschicht aufgebracht. Die Lacke enthielten die Wirksubstanzen gemäß Tabelle 2. Nach völliger Durchhärtung des Lackfilms (ca. 7 Tage) wurden verschiedene handelsübliche Spraydosen-Lacke aufgetragen und folgende Prüfungen durchgeführt.

1. Visuelle Beurteilung des Verlaufs der Antigraffitibeschichtung
2. Visuelle Beurteilung der Untergrundbenetzung der aufgetragenen Spraydosen-Lacke
   - 1 ≙ Sprühlack auf Antigraffitibeschichtung gut verlaufen
   - 2 ≙ Sprühlack auf Antigraffitibeschichtung zieht sich leicht zusammen
   - 3 ≙ Sprühlack auf Antigraffitibeschichtung zieht sich zusammen
3. Haftung der Spraydosenlacke auf der Antigraffitibeschichtung.

Nach 5-maligem Entfernen der aufgetragenen Sprühlacke mittels Ethylglykolacetat wurden die Prüfungen 2 und 3 wiederholt. Die Ergebnisse sind in Tabelle 2.

**Prüfmethode Innere Trennmittel**

Zur Prüfung der Trennwirkung wurden 320 g der PUR-RIM Formulierung in eine mit einer 0.1 mm starken Aluminiumfolie ausgelegten und auf 50 °C aufgeheizten Aluminiumform (30 cm x 30 cm x 0.3 cm) gegeben. Nach einer Reaktionszeit von 5 Minuten wurde die Prüfplatte entnommen und die anhaftende Aluminiumfolie in 2.5 cm breite Streifen geschnitten.
Unter einem Winkel von 180° zur Polyurethanprüfplatte wurden mit einer Geschwindigkeit von 30 cm/min die Aluminiumstreifen abgezogen. Es wurde die Kraft, die für dieses Abziehen erforderlich ist, gemessen (Schäladhäsion).
Ferner wurden die Startzeit der Reaktion (Zeitspanne nach Zugabe des Isocyanats bis zum Beginn des Aufschäumens) und die Verträglichkeit (Löslichkeit) der eingesetzten Polysiloxane in der Polyolkomponente geprüft.

Als Vergleichsbeispiele wurden folgende Substanzen eingesetzt.
Vergleichssubstanz 1 Beispiel 1 US-A-40 76 695
Vergleichssubstanz 2 Beispiel 2 EP-A-01 03 367
Vergleichssubstanz 3 Beispiel 1 EP-A-01 16 966 (Probe 1)
Tabelle 3 enthält Art und Menge der Wirksubstanzen und die Ergebnisse.

| **PUR-RIM Formulierung** | |
|---|---|
| Polyol (Wyandotte Pluracol® 380) | 44.34 Gew.% |
| 1,4-Butandiol | 8.86 Gew.% |
| Wasser | 0.07 Gew.% |
| DABCO® | 0.22 Gew.% |
| Dibutylzinndilaurat | 0.01 Gew.% |
| Isocyanat (Upjohn Isonate® 181) | 46.50 Gew.% |
| | 100.00 Gew.% |

**Prüfmethode Trennlack**

Mit einem 15 µm Rakel wurde auf Pergaminpapier (60 g/m$^2$) der Trennlack mit einer Auflage von ca. 8 g/m$^2$ aufgetragen und in einem Lacktrockenschrank 60 Sekunden bei 140 °C zu klebfreien Beschichtungen ausgehärtet und folgende Tests durchgeführt:

1. Trennwert bei 20 °C und 70 °C
2. Restklebekräfte

1. Bestimmung der Trennwerte

Auf das mit Trennlack beschichtete Papier wurde selbstklebendes Klebeband mit einer Breite von 3 cm aufgebracht und unter einer Belastung von 20 g/cm$^2$ 24 Stunden bei 20 °C bzw. 70 °C gelagert. Nach Abkühlen auf 20 °C wurde das Klebeband unter einem Winkel von 180 ° mit einer Geschwindigkeit von 60 cm/min abgezogen. Es wurde die Kraft, die für dieses Abziehen erforderlich ist, gemessen.

2. Bestimmung der Restklebekraft

Die abgezogenen Klebestreifen der Trennwerte wurden auf eine gereinigte Glasplatte aufgebracht und 24 Stunden mit 20 g/cm$^2$ belastet. Anschließend wurden die Klebestreifen, wie bei den Trennwerten beschrieben, abgezogen. Als Blindwert wurde der Klebestreifen auf Glas aufgebracht, der nicht auf beschichtetes Papier gewalzt wurde, und dieser Wert mit 100 % zugrunde gelegt. Die Ergebnisse sind in Tabelle 4 zusammengefaßt.

Tabelle 1

| | Einsatzmenge Wirksubstanz (%) | Harzverträglichkeit | | | | Gleitwiderstand (N) | | | | Gleitwiderstand (N) nach Abwaschen | | | |
|---|---|---|---|---|---|---|---|---|---|---|---|---|---|
| | | Lack A | Lack B | Lack C | Lack D | Lack A | Lack B | Lack C | Lack D | Lack A | Lack B | Lack C | Lack D |
| O-Probe | - | positiv | positiv | positiv | positiv | 2.65 | 2.94 | 2.80 | 2.75 | 2.60 | 3.00 | 2.85 | 2.90 |
| Vergleichsbeispiel 1 | 0.5 | negativ | negativ | negativ | negativ | 1.40 | 1.62 | 1.20 | 1.70 | 2.55 | 2.80 | 2.70 | 2.85 |
| Vergleichsbeispiel 2 | 0.5 | positiv | positiv | positiv | positiv | 1.08 | 1.18 | 0.81 | 0.95 | 2.60 | 2.85 | 2.65 | 2.75 |
| Vergleichsbeispiel 3 | 0.5 | negativ | negativ | negativ | negativ | 0.98 | 1.20 | 1.02 | 1.20 | 1.05 | 1.40 | 1.35 | 2.55 |
| Beispiel 1 | 0.5 | positiv | positiv | positiv | - | 0.80 | 0.83 | 0.50 | - | 0.85 | 0.89 | 0.56 | - |
| Beispiel 2 | 0.5 | positiv | positiv | positiv | - | 0.75 | 0.87 | 0.55 | - | 0.77 | 0.92 | 0.59 | - |
| Beispiel 3 | 0.5 | positiv | positiv | positiv | - | 0.82 | 0.94 | 0.57 | - | 0.86 | 0.99 | 0.63 | - |
| Beispiel 4 | 0.5 | positiv | positiv | positiv | - | 0.91 | 0.73 | 0.63 | - | 0.99 | 0.85 | 0.70 | - |
| Beispiel 5 | 0.5 | positiv | positiv | positiv | - | 0.93 | 0.92 | 0.59 | - | 1.01 | 0.98 | 0.64 | - |
| Beispiel 6 | 0.5 | positiv | positiv | positiv | - | 0.86 | 0.91 | 0.61 | - | 0.98 | 0.98 | 0.69 | - |
| Beispiel 7 | 0.5 | | positiv | positiv | - | | 0.96 | 0.70 | - | | 1.01 | 0.78 | - |
| Beispiel 8 | 0.5 | positiv | positiv | positiv | - | 0.80 | 0.89 | 0.75 | - | 0.87 | 0.94 | 0.79 | - |
| Beispiel 9 | 0.5 | | positiv | positiv | - | | 0.84 | 0.68 | - | | 0.92 | 0.73 | - |
| Beispiel 10 | 0.5 | | positiv | positiv | - | | 0.79 | 0.62 | - | | 0.90 | 0.71 | - |
| Beispiel 11 | 0.5 | positiv | positiv | positiv | - | 0.95 | 0.95 | 0.70 | - | 1.06 | 1.03 | 0.79 | - |
| Beispiel 12 | 0.5 | | positiv | positiv | - | | 0.86 | 0.63 | - | | 1.00 | 0.69 | - |
| Beispiel 13 | 0.5 | | positiv | positiv | - | | 0.79 | 0.62 | - | | 0.90 | 0.68 | - |
| Beispiel 14 | 0.5 | | positiv | positiv | - | | 0.84 | 0.67 | - | | 0.98 | 0.74 | - |
| Beispiel 19 | 0.5 | positiv | - | - | positiv | 0.98 | - | - | - | 1.10 | - | - | - |
| Beispiel 20 | 0.5 | - | - | - | positiv | - | - | - | 0.92 | - | - | - | 1.25 |

Tabelle 2

| | Einsatzmenge Wirksubstanz (%) | Verlauf | Untergrundbenetzung durch Spraydosenlack (Bewertung) | Haftung Spraydosenlack | Untergrundbenetzung nach 5-maliger Reinigung mit Ethylglykolacetat | Haftung nach 5maliger Reinigung mit Ethylglykolacetat |
|---|---|---|---|---|---|---|
| 0-Probe | - | schlecht | 1 | sehr gut | 1+ | sehr gut |
| Vergleichsbeispiel 1 | 1.0 | schlecht | 2 | gut | 1 | sehr gut |
| Vergleichsbeispiel 2 | 1.0 | gut | 1 | gut | 1 | sehr gut |
| Vergleichsbeispiel 3 | 1.0 | schlecht | 3 | keine | 3 | keine |
| Beispiel 1 | 1.0 | gut | 3 | keine | 3 | keine |
| Beispiel 2 | 1.0 | gut | 3 | keine | 3 | keine |
| Beispiel 4 | 1.0 | gut | 3 | keine | 3 | keine |
| Beispiel 5 | 1.0 | gut | 3 | keine | 3 | keine |
| Beispiel 6 | 1.0 | gut | 3 | keine | 3 | keine |
| Beispiel 8 | 1.0 | gut | 3 | keine | 3 | keine |
| Beispiel 11 | 1.0 | gut | 3 | keine | 3 | keine |
| Beispiel 19 | 1.0 | gut | 3 | keine | 3 | keine |

Tabelle 3

| | Einsatzmenge Wirksubstanz (%) | Startzeit (s) | Polyolverträglichkeit | Haftung (g/cm) |
|---|---|---|---|---|
| 0-Probe | - | 25 | | 1220 |
| Vergleichsbeispiel 1 | 1.5 | 115 | unverträglich | 226 |
| Vergleichsbeispiel 2 | 1.5 | 26 | unverträglich | 480 |
| Vergleichsbeispiel 3 | 1.5 | 27 | unverträglich | 395 |
| Beispiel 15 | 1.5 | 27 | verträglich | 240 |
| Beispiel 16 | 1.5 | 24 | verträglich | 254 |
| Beispiel 17 | 1.5 | 25 | verträglich | 210 |
| Beispiel 18 | 1.5 | 26 | verträglich | 230 |

Tabelle 4

| Beispiel | Einsatzmenge Wirksubstanz | Trennwert 20 °C (g/cm) | Trennwert 70 °C (g/cm) | Restklebekraft 20 °C (%) | Restklebekraft 70 °C (%) |
|---|---|---|---|---|---|
| 0-Probe | - | 180 | 210 | 96 | 91 |
| Nr. 3 | 3.0 % | 28 | 35 | 100 | 85 |
| Nr. 6 | 3.0 % | 26 | 34 | 95 | 88 |
| Nr. 8 | 3.0 % | 29 | 36 | 98 | 87 |

## Patentansprüche

1. Lacke und Formmassen mit einem antiadhäsive Eigenschaften erzeugenden und die Gleitfähigkeit erhöhenden Gehalt an Polysiloxanen, dadurch **gekennzeichnet,** daß sie als Polysiloxane polyestergruppenhaltige Polysiloxane der folgenden allgemeinen Durchschnittsformel in einer Menge von 0,05 bis 5 Gew.-% bezogen auf das Gesamtgewicht der Lacke oder Formmassen enthalten:

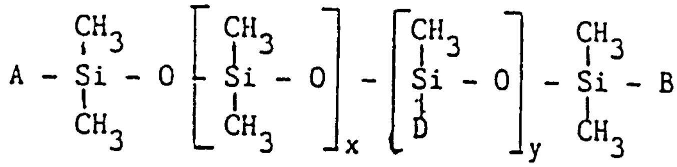 (I)

worin bedeuten:

A, B und D jeweils $-CH_3$ oder -Z-R-Q, wobei das durchschnittliche Molekül mindestens eine Gruppe -Z-R-Q enthält, worin Z für eine $C_{1-11}$-Alkylengruppe, $-(CH_2)_2SCH_2-$ oder $-(CH_2)_3NHCO-$; R für eine mindestens 3 Carbonsäureestergruppen enthaltende aliphatische und/oder cycloaliphatische und/oder aromatische Gruppe mit einem mittleren Molekulargewicht $\overline{Mn}$ von 300 bis 3000; und Q für eine Gruppe der Formel - OH, - CH = $CH_2$, - $C(CH_3)$ = $CH_2$,

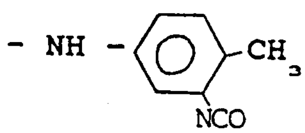 , 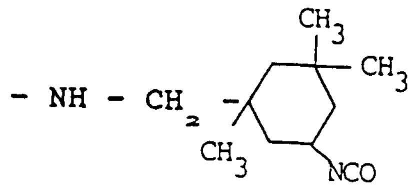

für einen Säurerest der Formel -COOH, -CH=CH-COOH oder für ein Alkali- oder Aminsalz eines dieser Säurereste steht.

x eine Zahl von 4 bis 50 und

y eine Zahl von 1 bis 6,

wobei das Verhältnis zwischen der Anzahl der Gruppen -Z-R-Q und der Zahl x 1:3 bis 1:30 beträgt.

**2.** Lacke und Formmassen nach Anspruch 1, dadurch gekennzeichnet, daß in den Resten R die Gruppen

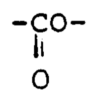

und/oder

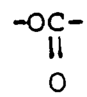

über bifunktionelle Kohlenwasserstoffgruppen mit 2 bis 12 Kohlenstoffatomen miteinander verbunden sind.

**3.** Lacke und Formmassen nach Anspruch 2, dadurch gekennzeichnet, daß in den Resten R die Gruppen

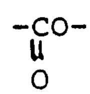

und/oder

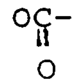

über bifunktionelle Kohlenwasserstoffgruppen mit 4 bis 6 Kohlenstoffatomen miteinander verbunden sind.

4. Lacke und Formmassen nach Anspruch 3, dadurch gekennzeichnet, daß in den Resten R die Gruppen

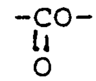

und/oder

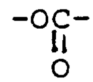

über gesättigte aliphatische Kohlenwasserstoffgruppen mit 5 Kohlenstoffatomen miteinander verbunden sind.

5. Lacke und Formmassen nach Anspruch 1, dadurch gekennzeichnet, daß R für eine Polycaprolactongruppe steht.

6. Lacke und Formmassen nach einem der mehreren der Ansprüche 1 bis 5, dadurch gekennzeichnet, daß A und B jeweils eine Gruppe -Z-R-Q und D $-CH_3$ bedeuten.

7. Lacke und Formmassen nach Anspruch 6, dadurch gekennzeichnet, daß das Verhältnis zwischen der Anzahl der Gruppen -Z-R-Q und der Zahl x im Bereich 1:3 bis 1:25. vorzugsweise im Bereich 1:5 bis 1:15, liegt.

8. Lacke und Formmassen nach einem oder mehreren der Ansprüche 1 bis 7, dadurch gekennzeichnet. daß A und B jeweils die Gruppe $-CH_3$ und D die Gruppe -Z-R-Q bedeuten.

9. Lacke und Formmassen nach Anspruch 8, dadurch gekennzeichnet. daß das Verhältnis zwischen der Anzahl der Gruppen -Z-R-Q und der Zahl x im Bereich 1:3 bis 1:25, vorzugsweise im Bereich 1:4 bis 1:16, liegt.

10. Lacke und Formmassen nach einem oder mehreren der Ansprüche 1 bis 9, dadurch gekennzeichnet, daß Q für -OH, -COOH, $-CH=CH_2$ oder $-C(CH_3)=CH_2$ steht.

11. Verwendung der polyestergruppenhaltigen Polysiloxane der allgemeinen Formel (I) nach den Ansprüchen 1 bis 10 als Zusatzmittel für Lacke und Formmassen in einer Menge von 0,05 bis 5 Gew.-% bezogen auf das Gesamtgewicht der Lacke oder Formmassen.

## Claims

1. Lacquers and moulding compositions having a content of polysiloxanes which creates anti-adhesive properties and increases slip, characterised in that the polysiloxanes they contain are polysiloxanes containing polyester groups and having the following general average formula in a quantity of 0.05 to 5 wt.% relative to the total weight of the lacquers or moulding compositions:

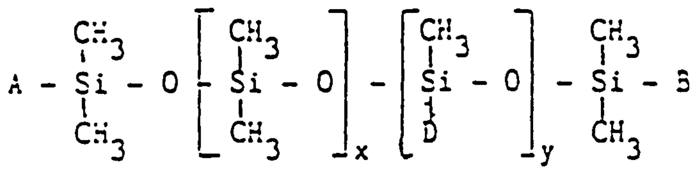 (I)

in which:

A, B and D each mean $-CH_3$ or -Z-R-Q, wherein the average molecule contains a least one -Z-R-Q group, in which Z denotes a $C_{1-11}$ alkylene group, $-(CH_2)_2SCH_2-$ or $-(CH_2)_3NHCO-$; R denotes an aliphatic and/or cycloaliphatic and/or aromatic group containing at least 3 carboxylic acid ester groups and having an average molecular weight $\overline{M}n$ of 300 to 3000; and Q denotes a group of formula -OH, $-CH=CH_2$, $-C(CH_3)=CH_2$,

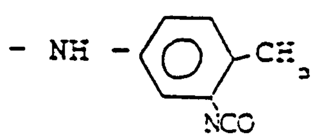 , 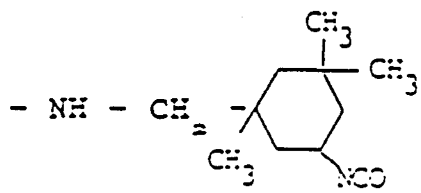

an acid residue of formula -COOH, -CH=CH-COOH or an alkali or amine salt of one of these acid residues,

x means a number from 4 to 50 and

y means a number from 1 to 6,

wherein the ratio between the number of -Z-R-Q groups and the number x is 1:3 to 1:30.

**2.** Lacquers and moulding compositions according to claim 1, characterised in that in the residues R the groups

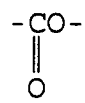

and/or

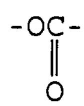

are attached together by means of bifunctional hydrocarbon groups with 2 to 12 carbon atoms.

**3.** Lacquers and moulding compositions according to claim 2, characterised in that in the residues R the groups

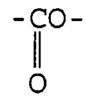

and/or

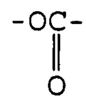

are attached together by means of bifunctional hydrocarbon groups with 4 to 6 carbon atoms.

**4.** Lacquers and moulding compositions according to claim 3, characterised in that in the residues R the groups

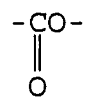

and/or

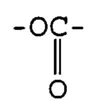

are attached together by means of saturated aliphatic hydrocarbon groups with 5 carbon atoms.

**5.** Lacquers and moulding compositions according to claim 1, characterised in that R denotes a polycaprolactone group.

**6.** Lacquers and moulding compositions according to one or more of claims 1 to 5, characterised in that A and B each mean a -Z-R-Q group and D means $-CH_3$.

**7.** Lacquers and moulding compositions according to claim 6, characterised in that the ratio between the number of -Z-R-Q groups and the number x is in the range 1:3 to 1:25, preferably in the range 1:5 to 1:15.

**8.** Lacquers and moulding compositions according to one or more of claims 1 to 7, characterised in that A and B each mean a $-CH_3$ group and D means a -Z-R-Q group.

**9.** Lacquers and moulding compositions according to claim 8, characterised in that the ratio between the number of -Z-R-Q groups and the number x is in the range 1:3 to 1:25, preferably in the range 1:4 to 1:16.

**10.** Lacquers and moulding compositions according to one or more of claims 1 to 9, characterised in that Q denotes -OH, -COOH, $-CH=CH_2$ or $-C(CH_3)=CH_2$.

**11.** Use of the polysiloxanes of general formula (I) containing polyester groups according to claims 1 to 10 as additives for lacquers and moulding compositions in a quantity of 0.05 to 5 wt.% relative to the total

weight of the lacquers or moulding compositions.

**Revendications**

1. Peintures et matières à mouler ayant une teneur en polysiloxanes engendrant des propriétés antiadhésives et augmentant l'aptitude au glissement, caractérisées en ce qu'elles contiennent, en tant que polysiloxanes, des polysiloxanes contenant des groupes polyester, de formule moyenne générale suivante, en une quantité de 0,05 à 5% en poids, par rapport au poids total des peintures ou matières à mouler :

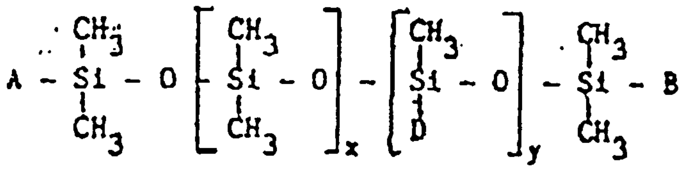

(I)

dans laquelle:

A, B et D représentent chacun $-CH_3$ ou -Z-R-Q, la molécule moyenne contenant au moins un groupe -Z-R-Q dans lequel Z représente un groupe alkylène en $C_1$-$C_{11}$, $-(CH_2)_2SCH_2$- ou $-(CH_2)_3NHCO$-; R représente un groupe aliphatique et/ou cycloaliphatique et/ou aromatique contenant au moins 3 groupes ester d'acide carboxylique et ayant une masse moléculaire moyenne $\overline{M}_n$ de 300 à 3 000; et Q représente un groupe de formule -OH, $-CH=CH_2$, $-(CH_3)=CH_2$,

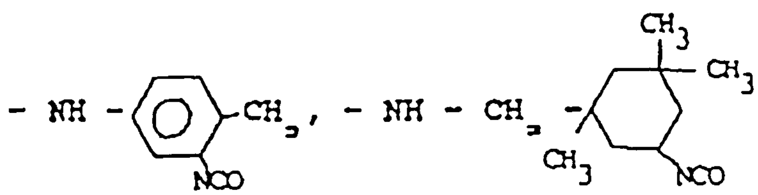

un radical acide de formule -COOH, -CH=CH-COOH ou un sel alcalin ou d'amine de ces radicaux acide;

x représente un nombre allant de 4 à 50; et

y représente un nombre allant de 1 à 6;

le rapport entre le nombre des groupes -Z-R-Q et le nombre x allant de 1:3 à 1:30.

2. Peintures et matières à mouler selon la revendication 1, caractérisées en ce que, dans les radicaux R, les groupes

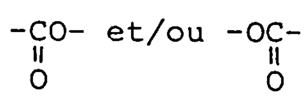

sont liés les uns aux autres par l'intermédiaire de groupes hydrocarbonés bifonctionnels ayant de 2 à 12 atomes de carbone.

3. Peintures et matières à mouler selon la revendication 2, caractérisées en ce que, dans les radicaux R, les groupes

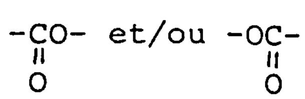

sont liés les uns aux autres par l'intermédiaire de groupes hydrocarbonés bifonctionnels ayant de 4 à 6 atomes de carbone.

4. Peintures et matières à mouler selon la revendication 3, caractérisées en ce que, dans les radicaux R, les groupes

$$-\underset{\underset{O}{\|}}{C}O- \quad \text{et/ou} \quad -O\underset{\underset{O}{\|}}{C}-$$

sont liés les uns aux autres par l'intermédiaire de groupes hydrocarbonés saturés aliphatiques ayant 5 atomes de carbone.

5. Peintures et matières à mouler selon la revendication 1, caractérisées en ce que R représente un groupe polycaprolactone.

6. Peintures et matières à mouler selon une ou plusieurs des revendications 1 à 5, caractérisées en ce que A et B représentent chacun un groupe -Z-R-Q et D représente $-CH_3$.

7. Peintures et matières à mouler selon la revendication 6, caractérisées en ce que le rapport entre le nombre des groupes -Z-R-Q et le nombre x se situe dans la plage allant de 1:3 à 1:25, de préférence dans la plage allant de 1:5 à 1:15.

8. Peintures et matières à mouler selon une ou plusieurs des revendications 1 à 7, caractérisées en ce que A et B représentent chacun le groupe $-CH_3$ et D représente le groupe -Z-R-Q.

9. Peintures et matières à mouler selon la revendication 8, caractérisées en ce que le rapport entre le nombre des groupes -Z-R-Q et le nombre x se situe dans la plage allant de 1:3 à 1:25, de préférence dans la plage allant de 1:4 à 1:16.

10. Peintures et matières à mouler selon une ou plusieurs des revendications 1 à 9, caractérisées en ce que Q représente -OH, -COOH, $-CH=CH_2$ ou $-C(CH_3)=CH_2$.

11. Utilisation des polysiloxanes contenant des groupes polyester de formule générale (I) selon les revendications 1 à 10, en tant qu'additifs pour peintures et matières à mouler, en une quantité de 0,05 à 5% en poids par rapport au poids total des peintures ou matières à mouler.